(19) **Europäisches Patentamt / European Patent Office / Office européen des brevets**

(11) **EP 4 156 340 A1**

(12) **EUROPEAN PATENT APPLICATION**
published in accordance with Art. 153(4) EPC

(43) Date of publication:
**29.03.2023 Bulletin 2023/13**

(21) Application number: **22763311.2**

(22) Date of filing: **02.03.2022**

(51) International Patent Classification (IPC):
**H01M 4/525** (2010.01)     **H01G 11/52** (2013.01)
**H01M 50/42** (2021.01)     **H01M 50/431** (2021.01)
**H01M 50/443** (2021.01)     **H01M 50/446** (2021.01)
**H01M 50/451** (2021.01)     **H01M 50/489** (2021.01)

(52) Cooperative Patent Classification (CPC):
**H01G 11/52; H01M 4/525; H01M 50/42;**
**H01M 50/431; H01M 50/443; H01M 50/446;**
**H01M 50/451; H01M 50/489;** Y02E 60/10

(86) International application number:
**PCT/JP2022/008796**

(87) International publication number:
**WO 2022/186257 (09.09.2022 Gazette 2022/36)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **05.03.2021 JP 2021035688**

(71) Applicant: **Asahi Kasei Kabushiki Kaisha**
**Tokyo 1000006 (JP)**

(72) Inventors:
- **MACHIDA, Naoki**
  **Tokyo 100-0006 (JP)**
- **UCHIDA, Yuki**
  **Tokyo 100-0006 (JP)**
- **HOSOKIBARA, Atsushi**
  **Tokyo 100-0006 (JP)**

(74) Representative: **dompatent von Kreisler Selting**
**Werner -**
**Partnerschaft von Patent- und Rechtsanwälten**
**mbB**
**Deichmannhaus am Dom**
**Bahnhofsvorplatz 1**
**50667 Köln (DE)**

(54) **SEPARATOR FOR POWER STORAGE DEVICES, AND POWER STORAGE DEVICE**

(57) A separator for an electricity storage device, including:
a layer (A) containing a polyolefin; and
a layer (B) disposed on at least one surface of the layer (A) and containing an inorganic filler, a water-insoluble binder, a water-soluble binder, and a polyacrylic acid-based dispersant, wherein
a heat shrinkage rate S1 of the separator for the electricity storage device at 140°C in propylene carbonate is 5% or less.

EP 4 156 340 A1

**Description**

Technical Field

The present invention relates to a separator for an electricity storage device and an electricity storage device.

Background Art

Electricity storage devices, a representative example being lithium ion secondary batteries (LiBs), have been actively developed in recent years. An electricity storage device generally includes a power generating element having a separator interposed between a positive electrode and a negative electrode and being impregnated with an electrolyte solution. The separator has fine pores formed therein, and serves to allow lithium ions to permeate during normal use of the electricity storage device and to block permeation of lithium ions to prevent thermal runaway during abnormal heat generation of the electricity storage device.

As a separator, Patent Literature 1, for example, proposes a separator (inorganic coated separator) which is obtained by coating a polyolefin-based substrate with a slurry containing non-conductive particles, a water-soluble polymer having a monomer unit containing an acidic group, and a particulate polymer, the amount of the water-soluble polymer being within a predetermined range, the BET specific surface area of the non-conductive particles being within a predetermined range. The separator is assumed to improve the high temperature cycle characteristics and safety of lithium ion secondary batteries.

Citation List

Patent Literature

Patent Literature 1: Japanese Patent Laid-Open No. 2019-140114

Summary of Invention

Technical Problem

Particularly in high-grade LiBs to be mounted on vehicles, an increase in the capacity of batteries has been vigorously attempted in recent years in order to extend the cruising distance of electric vehicles. Enhancing the Ni proportion in the positive electrode leads to an improvement in the capacity and a reduction in the amount of Co, which is a rare metal, to thereby lower the costs. Thus, there has been one trend towards a higher amount of nickel in positive electrode materials.

However, an increase in the nickel content ratio in the positive electrode material results in lowering of the thermal decomposition temperature and also a large amount of heat generation. Accordingly, even a battery temperature at which no thermal runaway has occurred so far may lead to an accident such as ignition or thermal runaway. In consideration of such an operating environment, it is not permissible for the separator, which serves to secure the safety of a battery, to have slight short-circuiting in association with shrinkage or a film rupture.

Meanwhile, the separator, which does not contribute to the charge and discharge reaction, is required to be thinner from the viewpoint of a larger battery capacity, and the strength per unit resin weight is required to be enhanced in order to secure the absolute strength of the separator. However, such separators are likely to shrink by heat, and the thermal safety of batteries thus tends to decrease. The heat shrinkage rate of separators is generally measured in air. A polymer material that serves as a binding agent in the coated layer of an inorganic coated separator swells in a carbonate electrolyte solution to have a lower strength during heat generation of a battery. Thus, the strength of the coated layer and the binding strength between the coated layer and the polyolefin-based substrate tend to decrease. For this reason, even in an inorganic coated separator having low heat shrinkage measured in air, heat shrinkage increases in a battery filled with an electrolyte solution, and safety may not be secured. Under such circumstances, it is becoming difficult for conventional inorganic coated separators to secure safety.

As mentioned above, the technique described in Patent Literature 1 leaves room for further improvement, from the viewpoint of achieving a separator that suppresses heat shrinkage in an electrolyte solution and can ensure safety even in combination with a positive electrode material having a high nickel content.

The present invention has been made in view of the problems of the conventional art described above, and an object is to provide a separator for an electricity storage device that suppresses heat shrinkage in an electrolyte solution and can ensure safety even in combination with a positive electrode material having a high nickel content.

Solution to Problem

As a result of having conducted diligent research to solve the above problems, the present inventors have found that a separator can ensure safety even in combination with a positive electrode material having a high nickel content, as long as the separator has a layer containing predetermined components, the heat shrinkage rate of the separator under a predetermined environment is within a predetermined range and/or the interfacial peel strength between layers measured under predetermined conditions is within a predetermined range, and have completed the present invention.

That is, the present invention includes the following aspects.

[1] A separator for an electricity storage device, comprising:

a layer (A) comprising a polyolefin; and
a layer (B) disposed on at least one surface of the layer (A) and comprising an inorganic filler, a water-insoluble binder, a water-soluble binder, and a polyacrylic acid-based dispersant,
wherein a heat shrinkage rate S1 of the separator for the electricity storage device at 140°C in propylene carbonate is 5% or less.

[2] A separator for an electricity storage device, comprising:

a layer (A) comprising a polyolefin; and
a layer (B) disposed on at least one surface of the layer (A) and comprising an inorganic filler, a water-insoluble binder, a water-soluble binder, and a polyacrylic acid-based dispersant,
wherein the polyacrylic acid-based dispersant comprises one or more selected from the group consisting of:

a neutralized monovalent metal ion salt of polyacrylic acid, and
a copolymer of the neutralized monovalent metal ion salt of acrylic acid and acrylic acid,

the water-soluble binder comprises a cellulose ether, and
an interfacial peel strength H between the layer (A) and the layer (B) in propylene carbonate is 3 N/m or more.

[3] The separator for the electricity storage device according to [1] or [2], wherein a basis weight-equivalent puncture strength, of the layer (A) is 40 gf/(g/m$^2$) or more.
[4] The separator for the electricity storage device according to any of [1] to [3], wherein a heat shrinkage rate S2 of the separator for the electricity storage device at 150°C in air is 5% or less.
[5] The separator for the electricity storage device according to any of [1], [3], and [4], wherein the heat shrinkage rate S1 is 2.50 or less.
[6] The separator for the electricity storage device according to any of [1] to [5], wherein a thickness T of the separator for the electricity storage device is 3 μm or more and 16 μm or less.
[7] The separator for the electricity storage device according to any of [1] to [6], wherein a ratio of a thickness of the layer (B) $T_B$ to the thickness T, $T_B/T$, is from 0.1 to 0.3.
[8] The separator for the electricity storage device according to any of [1] to [7], wherein a puncture strength of the separator for the electricity storage device is 200 gf or more.
[9] The separator for the electricity storage device according to any of [1] to [8], wherein an absorption peak ratio at 1734 cm$^{-1}$/2918 cm$^{-1}$, which is obtained by measuring the surface of the layer (A) on the layer (B) side with ATR-IR, is from 0.025 to 0.125.
[10] The separator for the electricity storage device according to any of [1] and [3] to [9], wherein the polyacrylic acid-based dispersant comprises one or more selected from the group consisting of:

a neutralized monovalent metal ion salt of polyacrylic acid, and
a copolymer of the neutralized monovalent metal ion salt of acrylic acid and acrylic acid.

[11] The separator for the electricity storage device according to any of [1] and [3] to [10], wherein the water-soluble binder comprises a cellulose ether.
[12] The separator for the electricity storage device according to any of [1] to [11], wherein the inorganic filler has a D50 particle diameter of 0.1 μm or more and 0.7 μm or less.
[13] The separator for the electricity storage device according to any of [1] to [12], wherein an air permeability of the separator for the electricity storage device is from 50 to 500 seconds/100 cc.

[14] The separator for the electricity storage device according to any of [1] to [13], wherein an air permeability of the layer (A) is from 30 to 450 seconds/100 cc.

[15] An electricity storage device comprising:

a positive electrode comprising Li, Co, and Ni;
a negative electrode opposed to the positive electrode; and
the separator for the electricity storage device according to any of [1] to [14], disposed between the positive electrode and the negative electrode,
wherein a content ratio of each of the Co and Ni in the metals other than Li in the positive electrode is 20 mol% or less and 60 mol% or more.

Advantageous Effects of Invention

According to the present invention, it is possible to provide a separator for an electricity storage device that suppresses heat shrinkage in an electrolyte solution and can ensure safety even in combination with a positive electrode material having a high nickel content.

Description of Embodiments

Hereinbelow, an embodiment for carrying out the present invention (hereinafter referred to as "the present embodiment") will now be described in detail, but the present invention is not limited thereto and can be variously modified without departing the gist of the invention. "(Meth)acryl" herein means "acryl" and the corresponding "methacryl". "To" indicating a numerical range herein means to include numerals before and after the "to" as the lower limit and upper limit, unless otherwise indicated.

[Separator for electricity storage device]

A separator for an electricity storage device according to a first aspect of the present embodiment (hereinafter, also referred to as the "first separator") is a separator for an electricity storage device, comprising a layer (A) comprising a polyolefin, and a layer (B) disposed on at least one surface of the layer (A) and comprising an inorganic filler, a water-insoluble binder, a water-soluble binder, and a polyacrylic acid-based dispersant, wherein the heat shrinkage rate S1 of the separator for an electricity storage device at 140°C in propylene carbonate is 5% or less. The first separator, having the configuration as described above, suppresses heat shrinkage in an electrolyte solution and can ensure safety even in combination with a positive electrode material having a high nickel content.

A separator for an electricity storage device according to a second aspect of the present embodiment (hereinafter, also referred to as the "second separator") is a separator for an electricity storage device, comprising a layer (A) comprising a polyolefin, and a layer (B) disposed on at least one surface of the layer (A) and comprising an inorganic filler, a water-insoluble binder, a water-soluble binder, and a polyacrylic acid-based dispersant, wherein the polyacrylic acid-based dispersant comprises one or more selected from the group consisting of a neutralized monovalent metal ion salt of polyacrylic acid and a copolymer of a neutralized monovalent metal ion salt of acrylic acid and acrylic acid, the water-soluble binder comprises cellulose ether, and the interfacial peel strength H between the layer (A) and the layer (B) in propylene carbonate is 3 N/m or more. The second separator, having the configuration as described above, also suppresses heat shrinkage in an electrolyte solution and can ensure safety even in combination with a positive electrode material having a high nickel content.

Herein, the description regarding the separator for an electricity storage device hereinafter is related to both the first separator and the second separator, unless otherwise indicated. The description will be made by assuming that "the separator for an electricity storage device of the present embodiment" encompasses the first separator and the second separator.

(Layer (A))

The layer (A) contains a polyolefin, serving as the substrate of the separator for an electricity storage device. The layer (A) preferably contains a polyolefin as the main component. The content of the polyolefin in the layer (A) is preferably 75% by mass or more, more preferably 85% by mass or more, still more preferably 90% by mass or more, even still more preferably 95% by mass or more, particularly preferably 98% by mass or more, based on the total mass of the layer (A). The upper limit of the content is not particularly limited and may be 100% by mass.

Examples of the form of the layer (A) include, but are not particularly limited to, polyolefin microporous bodies. Examples of polyolefin microporous bodies, include, also but are not particularly limited to, polyolefin films, polyolefin-based fiber fabrics (woven fabrics), and polyolefin-based fiber non-woven fabrics.

(Polyolefin)

Examples of the polyolefin include, but are not particularly limited to, homopolymers, copolymers, and multiple-stage polymers provided using a monomer such as ethylene, propylene, 1-butene, 4-methyl-1-pentene, 1-hexene, and 1-octene. These polymers may be used singly or in admixture of two or more. The polyolefin preferably contains at least one selected from the group consisting of polyethylene, polypropylene, and copolymers thereof, more preferably contains polyethylene, from the viewpoint of providing the layer (A) with melt viscosity, shut-down and melt-down properties appropriate for a separator. Also in the present embodiment, from the viewpoint of adjusting the physical properties, the polyolefin may contain polypropylene. For example, the polyolefin may contain an ethylene-propylene copolymer or a mixture of polyethylene and polypropylene.

Specific examples of the polyethylene include, but are not particularly limited to, low density polyethylene (LDPE), linear low density polyethylene (LLDPE), medium density polyethylene (MDPE), high density polyethylene (HDPE), high molecular weight polyethylene (HMWPE), and ultrahigh molecular weight polyethylene (UHMWPE).

In the present embodiment, high molecular weight polyethylene (HMWPE) means polyethylene having a viscosity average molecular weight (Mv) of 100,000 or more. The Mv of ultrahigh molecular weight polyethylene (UHMWPE) is generally 1,000,000 or more. Thus, the high molecular weight polyethylene (HMWPE) in the present embodiment encompasses, by definition, UHMWPE.

In the present embodiment, high density polyethylene refers to polyethylene having a density of 0.942 to 0.970 $g/cm^3$. The density of polyethylene in the present embodiment refers to a value measured in accordance with D) Density gradient tube method described in JIS K7112 (1999).

Specific examples of polypropylene include, but are not particularly limited to, isotactic polypropylene, syndiotactic polypropylene, and atactic polypropylene.

Specific examples of copolymers of ethylene and propylene include, but are not particularly limited to, ethylene-propylene random copolymers and ethylene propylene rubber.

When the polyolefin (PO) in the layer (A) contains polyethylene (PE), the PE content is, on the basis of the total mass of the resin components constituting the layer (A), 50% by mass or more and 100% by mass or less, and from the viewpoint of fuse characteristics and meltdown characteristics, preferably 85% by mass or more and 100% by mass or less, more preferably 90% by mass or more and 95% by mass or less.

When the PO in the layer (A) contains polypropylene (PP), the PP content is, on the basis of the total mass of the resin components constituting the layer (A), more than 0% by mass and less than 50% by mass, and from the viewpoint of melt viscosity and fuse characteristics, preferably more than 0% by mass and 20% by mass or less, more preferably 5% by mass or more and 10% by mass or less.

The layer (A) may contain a resin other than the polyolefins listed above. Examples of the resin include, but are not particularly limited to, polyethylene terephthalate, polycycloolefins, polyethersulfone, polyamide, polyimide, polyamideimide, polyaramide, polyvinylidene fluoride, nylon, and polytetrafluoroethylene.

(Melt index)

The melt index (MI) at 190°C of the layer (A) is preferably from 0.02 g/10 min to 0.5 g/10 min, more preferably from 0.05 g/10 min to 0.3 g/10 min, from the viewpoint of suppressing a high viscosity of the resin composition containing a polyolefin (hereinafter, also referred to as the "polyolefin resin composition") on film formation to thereby suppress occurrence of defective products. More specifically, the MI is preferably from 0.02 g/10 min to 0.50 g/10 min, more preferably 0.05 g/10 min to 0.30 g/10 min.

(Basis weight-equivalent puncture strength)

The puncture strength when expressed in terms of the basis weight of the layer (A) ($g/m^2$) (hereinafter, also referred to as the "basis weight-equivalent puncture strength") can be 30 $gf/(g/m^2)$ or more, for example, and is preferably 40 $gf/(g/m^2)$ or more. When the layer (A) has a basis weight-equivalent puncture strength of 40 $gf/(g/m^2)$ or more, the layer (A) tends to become difficult to break in an impact test of the electricity storage device. From the viewpoint of improving the safety, for example, impact resistance of the electricity storage device while maintaining the strength of the layer (A), the basis weight-equivalent puncture strength is more preferably 50 $gf/(g/m^2)$ or more, still more preferably 60 $gf/(g/m^2)$ or more, even still more preferably 70 $gf/(g/m^2)$ or more, further preferably 80 $gf/(g/m^2)$ or more, still further preferably 90 $gf/(g/m^2)$ or more. The basis weight-equivalent puncture strength may be 200 $gf/(g/m^2)$ or less, for example, may be 150 $gf/(g/m^2)$ or less, or may be 120 $gf/(g/m^2)$ or less, but is not limited thereto.

The basis weight-equivalent puncture strength described above can be measured by a method described in examples mentioned below. The basis weight-equivalent puncture strength can be adjusted within the above range by appropriately adjusting the values of basis weight and puncture strength, for example, by a method mentioned below and the like. More specifically, the basis weight-equivalent puncture strength can be adjusted within the above range by adjusting, for example, the molecular weight of the polyolefin resin composition, the mix proportion of the polyolefin resin composition and a plasticizer, the stretching temperature, and the stretching ratio.

(Basis weight)

The basis weight of the layer (A) is preferably 1.5 $g/m^2$ or more, more preferably 2.0 $g/m^2$ or more, still more preferably 2.5 $g/m^2$ or more, from the viewpoint of improving the strength, and is preferably 7.0 $g/m^2$ or less, more preferably 6.5 $g/m^2$ or less, still more preferably 5.5 $g/m^2$ or less, from the viewpoint of improving the capacity of the electricity storage device. The basis weight of the layer (A) can be measured by a method described in examples mentioned below and can be adjusted by controlling, for example, the die lip interval, the stretching ratio in a stretching step, and the like.

(Puncture strength)

The puncture strength not expressed in terms of the basis weight of the layer (A) (hereinafter, simply referred to as the "puncture strength") is, from the viewpoint of suppressing a break of the layer (A) in an impact test, preferably 100 gf or more, more preferably 200 gf or more, still more preferably 250 gf or more, even still more preferably 300 gf or more, further preferably 350 gf or more, still further preferably 400 gf or more, particularly preferably 450 gf or more. From the viewpoint of stability on film formation of the layer (A), the puncture strength described above is preferably 1,000 gf or less, more preferably 900 gf or less.

However, the lower limit value of the puncture strength is not limited to the examples mentioned above, and there can be employed any value at which film formation and battery manufacturing can be stably conducted. The upper limit value of the puncture strength is also not limited to the examples mentioned above and can be appropriately set in balance with other characteristics.

The puncture strength can be measured by a method described in examples mentioned below.

With the assumption that the polyolefin resin composition is extruded to provide the layer (A), the puncture strength can be enhanced by an increase in the orientation of the molecular chain caused by the shear force or stretching applied to a molded product on extrusion. From the viewpoint of avoiding an increase in a residual stress to improve the thermal stability, the orientation of the molecular chain caused by the shear force or stretching is preferably controlled so as not to excessively increase.

(Thickness)

The thickness of the layer (A) is preferably 3 $\mu$m or more, more preferably 4 $\mu$m or more, still more preferably 5 $\mu$m or more, from the viewpoint of improving the strength and voltage resistance. More specifically, the thickness is preferably 3.0 $\mu$m or more, more preferably 4.0 $\mu$m or more, still more preferably 5.0 $\mu$m or more. The thickness of the layer (A) is preferably 12 $\mu$m or less, more preferably 11 $\mu$m or less, still more preferably 10 $\mu$m or less, from the viewpoint of improving the capacity of the electricity storage device. More specifically, the thickness is preferably 12.0 $\mu$m or less, more preferably 11.0 $\mu$m or less, still more preferably 10.0 $\mu$m or less. The thickness of the layer (A) can be measured by a method described in examples mentioned below and can be adjusted by controlling, for example, the die lip interval, the stretching ratio in a stretching step, and the like.

(Porosity)

The porosity of the layer (A) is preferably 200 or more, more preferably 300 or more, still more preferably 350 or more, from the viewpoint of permeability and is preferably 700 or less, more preferably 600 or less, still more preferably 500 or less, from the viewpoint of the film strength and voltage resistance.

The porosity described above can be measured by a method described in examples mentioned below.

The porosity can be adjusted by controlling, for example, the mix proportion of the polyolefin resin composition and a plasticizer, the stretching temperature, the stretching ratio, the heat setting temperature, the stretching ratio during heat setting, the relaxation ratio during heat setting, and the like and combining these.

(Air permeability)

The air permeability of the layer (A) is preferably 10 sec/100 $cm^3$ or more, more preferably 50 sec/100 $cm^3$ or

more, still more preferably 80 sec/100 cm$^3$ or more, from the viewpoint of preventing an excess electric current from flowing among a plurality of electrodes via the layer (A) and is preferably 1,000 sec/100 cm$^3$ or less, more preferably 300 sec/100 cm$^3$ or less, still more preferably 200 sec/100 cm$^3$ or less, particularly preferably 160 sec/100 cm$^3$ or less, from the viewpoint of permeability.

The air permeability can be measured by a method described in examples mentioned below.

The air permeability can be adjusted by controlling, for example, the heat setting temperature, the stretching ratio during heat setting, the relaxation ratio during heat setting, and the like and combining these.

(Absorption peak ratio)

Before forming a layer (B) on the surface of the layer (A), it is preferable to subject the layer (A) to a corona discharge treatment, a plasma treatment, or the like to adjust the surface properties. The surface properties can be confirmed by ATR-IR and more specifically can be confirmed with an absorption peak ratio at 1734 cm$^{-1}$/2918 cm$^{-1}$, which is obtained by measuring the surface of the layer (A) with ATR-IR. In the present embodiment, the absorption peak ratio at 1734 cm$^{-1}$/2918 cm$^{-1}$, which is obtained by measuring the surface of the layer (A) on the layer (B) side with ATR-IR, can be, for example, from 0.010 to 0.180 and is preferably from 0.025 to 0.125.

When the absorption peak ratio described above is 0.025 or more, the interaction of oxygen atom-containing functional groups mainly including carbonyl groups and carboxyl groups formed on the surface of the layer (A) with the water-insoluble binder and the water-soluble binder in the layer (B) becomes larger. Consequently, there is a tendency that heat shrinkage in the electrolyte solution can be sufficiently suppressed. When the absorption peak ratio is 0.125 or less, excessive impregnation of pores of the layer (A) with the resin component contained in the coating liquid on formation of the layer (B) is suppressed. Consequently, the permeability tends to be improved.

From the above viewpoints, the absorption peak ratio is more preferably from 0.040 to 0.105, still more preferably from 0.055 to 0.085.

The absorption peak ratio can be measured by a method described in examples mentioned below.

The absorption peak ratio can be adjusted by conducting, for example, a corona discharge treatment or a plasma discharge treatment under preferable conditions mentioned below.

(Viscosity average molecular weight)

The viscosity average molecular weight (Mv) of the layer (A) is preferably 400,000 or more and 1,300,000 or less, more preferably 450,000 or more and 1,200,000 or less, still more preferably 500,000 or more and 1,150,000 or less. When the Mv of the layer (A) is 400,000 or more, the melt tension during melt molding becomes larger, and the moldability becomes satisfactory as well as a high film strength tends to be provided due to entanglements of polymers. When the Mv is 1,300,000 or less, uniform melt-kneading of the starting material is facilitated, and the sheet moldability, particularly the thickness stability tends to be excellent. Additionally, during use as a separator for an electricity storage device, pores are easily blocked during temperature increase, and also a satisfactory fuse function tends to be provided.

The Mv can be determined from the intrinsic viscosity [η] in a decalin solvent at 135°C based on ASTM-D4020.

The Mv of polyethylene can be calculated by the following equation.

$$[\eta] = 6.77 \times 10^{-4} \mathrm{Mv}^{0.67}$$

The Mv of polypropylene can be calculated by the following equation.

$$[\eta] = 1.10 \times 10^{-4} \mathrm{Mv}^{0.80}$$

(Average pore size)

The layer (A) preferably has ion conductivity, has high resistance to organic solvents, and has a fine pore size from the viewpoint of application to a separator for a lithium ion secondary battery, particularly application to a separator for a laminate-type lithium ion secondary battery. For this reason, the average pore size of the layer (A) is preferably 0.03 μm or more and 0.70 μm or less, more preferably 0.04 μm or more and 0.20 μm or less, still more preferably 0.05 μm or more and 0.10 μm or less, even still more preferably 0.055 μm or more and 0.09 μm or less. The average pore size of the layer (A) is preferably 0.03 μm or more and 0.70 μm or less from the viewpoint of ion conductivity and voltage resistance.

The average pore size can be adjusted by controlling, for example, the compositional ratio of the polyolefin resin composition, the type of the polyolefin or the plasticizer, the cooling rate of an extrusion sheet, the stretching temperature, the stretching ratio, the heat setting temperature, the stretching ratio during heat setting, the relaxation ratio during heat setting, and the like and combining these. The average pore size can be measured using a permporometer in accordance with a half dry method.

(Layer (B))

The layer (B) is a layer disposed on at least one surface of the layer (A) and containing an inorganic filler, a water-insoluble binder, a water-soluble binder, and a polyacrylic acid-based dispersant. The layer (B) has a function of particularly suppressing shrinkage due to heat in the separator for an electricity storage device.

(Thickness)

The thickness of the layer (B) is preferably 0.5 $\mu$m or more, more preferably 0.6 $\mu$m or more, still more preferably 0.7 $\mu$m or more, even still more preferably 1.0 $\mu$m or more, from the viewpoint of improving the heat resistance. Also, the thickness of the layer (B) is preferably 5 $\mu$m or less, more preferably 4 $\mu$m or less, still more preferably 3 $\mu$m or less, from the viewpoint of improving the capacity of the electricity storage device. More specifically, the thickness is preferably 5.0 $\mu$m or less, more preferably 4.0 $\mu$m or less, still more preferably 3.0 $\mu$m or less.

The layer (B) may be formed only on one surface of the layer (A) or may be formed on both the surfaces of the layer (A). When the layers (B) are formed on the both the surfaces of the layer (A), the thickness, as the total thickness of the layers (B), is preferably encompassed in the range mentioned above.

The thickness of the layer (B) can be measured by a method described in examples mentioned below and can be adjusted by, for example, the amount of a coating liquid to be used on forming the layer (B), the application conditions for the coating liquid, and the like.

(Inorganic filler)

A preferable inorganic filler in the layer (B) is, but is not particularly limited to, one that has high heat resistance and electrical insulation and is electrochemically stable in the range of use of a lithium ion secondary battery. Examples of the inorganic filler include, but are not limited to, oxide-based ceramics such as alumina, silica, titania, zirconia, magnesia, ceria, yttria, zinc oxide, and iron oxide; nitride-based ceramics such as silicon nitride, titanium nitride, and boron nitride; ceramics such as silicon carbide, calcium carbonate, magnesium sulfate, aluminum sulfate, barium sulfate, aluminum hydroxide, aluminum hydroxide oxide or boehmite, potassium titanate, talc, kaolinite, dickite, nacrite, halloysite, pyrophyllite, montmorillonite, sericite, mica, amesite, bentonite, asbestos, zeolite, calcium silicate, magnesium silicate, diatomaceous earth, and silica sand; and glass fiber. Among these, at least one selected from the group consisting of alumina, boehmite, and barium sulfate is preferable from the viewpoint of stability in a lithium ion secondary battery. Preferable boehmite is synthetic boehmite capable of reducing ionic impurities, which adversely affect the characteristics of electrochemical elements. Inorganic fillers may be used singly or in combinations of two or more.

Examples of the shape of inorganic fillers include tabular, scaly, polyhedral, needle-shaped, columnar, granular, spherical, spindle-shaped, and block-shaped, and a plurality of inorganic fillers having a shape described above may be used in combination. Among these, block-shaped is preferable from the viewpoint of the balance between permeability and heat resistance.

The aspect ratio of the inorganic filler is preferably 1.0 or more and 3.0 or less, more preferably 1.1 or more and 2.5 or less. An aspect ratio of 3.0 or less is preferable from the viewpoint of reducing the moisture adsorption of the separator for an electricity storage device to thereby suppress degradation of the capacity when cycles are repeated and from the viewpoint of suppressing deformation at temperatures higher than the melting point of the layer (A).

The aspect ratio of the inorganic filler can be determined by image-analyzing an image shot with a scanning electron microscope (SEM).

The specific surface area of the inorganic filler is preferably 5.0 $m^2$/g or more and 20 $m^2$/g or less, more preferably 5.5 $m^2$/g or more and 18 $m^2$/g or less, still more preferably 6.0 $m^2$/g or more and 16 $m^2$/g or less. More specifically, the specific surface area is preferably 5.0 $m^2$/g or more and 20.0 $m^2$/g or less, more preferably 5.5 $m^2$/g or more and 18.0 $m^2$/g or less, still more preferably 6.0 $m^2$/g or more and 16.0 $m^2$/g or less. The case where the specific surface area is 20 $m^2$/g or less is preferable from the viewpoint of reducing the moisture adsorption of the separator for an electricity storage device to thereby suppress degradation of the capacity when cycles are repeated. The case where the specific surface area is 5.0 $m^2$/g or more is preferable from the viewpoint of suppressing deformation at temperatures higher than the melting point of the layer (A). The specific surface area of the inorganic filler can be measured using a BET adsorption method.

The volume average particle diameter D50 of the inorganic filler can be, for example, 1.0 $\mu$m or less and is

preferably 0.10 $\mu$m or more and 0.70 $\mu$m or less. The case where the D50 is 0.10 $\mu$m or more is preferable from the viewpoint of reducing the moisture adsorption of the separator for an electricity storage device to thereby suppress degradation of the capacity when cycles are repeated. The D50 being 0.70 $\mu$m or less is preferable from the viewpoint of suppressing deformation at temperatures higher than the melting point of the layer (A). From the above viewpoints, the D50 is more preferably 0.10 $\mu$m or more and 0.60 $\mu$m or less, still more preferably 0.10 $\mu$m or more and 0.50 $\mu$m or less, even still more preferably 0.10 $\mu$m or more and 0.49 $\mu$m or less.

The volume average particle diameter D50 of the inorganic filler can be measured by a method described in examples mentioned below.

Examples of a method for adjusting the volume average particle diameter D50 of the inorganic filler in a manner as described above include a method of pulverizing the inorganic filler using a ball mill, a bead mill, a jet mill, or the like to provide a desired particle size distribution and a method of preparing a plurality of fillers each having a different particle size distribution followed by blending.

The particle diameter of the inorganic filler redispersed from the layer (B) can be, for example, 1.0 $\mu$m or less and is preferably 0.10 $\mu$m or more and 0.70 $\mu$m or less. The case where the particle diameter of the inorganic filler redispersed from the layer (B) is 0.10 $\mu$m or more is preferable from the viewpoint of reducing the moisture adsorption of the separator for an electricity storage device to thereby suppress degradation of the capacity when cycles are repeated. The particle diameter of the inorganic filler redispersed from the layer (B) being 0.70 $\mu$m or less is preferable from the viewpoint of suppressing deformation at temperatures higher than the melting point of the layer (A). From the above viewpoints, the particle diameter of the inorganic filler redispersed from the layer (B) is more preferably 0.10 $\mu$m or more and 0.60 $\mu$m or less, still more preferably 0.10 $\mu$m or more and 0.50 $\mu$m or less, even still more preferably 0.10 $\mu$m or more and 0.49 $\mu$m or less.

The particle diameter of the inorganic filler redispersed from the layer (B) can be measured by a method described in examples mentioned below.

Examples of a method for adjusting the particle diameter of the inorganic filler redispersed from the layer (B) in a manner as described above include a method of pulverizing the inorganic filler using a ball mill, a bead mill, a jet mill, or the like to provide a desired particle size distribution, and a method of preparing a plurality of fillers each having a different particle size distribution followed by blending.

The primary particle diameter of the inorganic filler in the layer (B) can be, for example, 1.0 $\mu$m or less and is preferably 0.10 $\mu$m or more and 0.70 $\mu$m or less. The case where the primary particle diameter of the inorganic filler in the layer (B) is 0.10 $\mu$m or more is preferable from the viewpoint of reducing the moisture adsorption of the separator for an electricity storage device to thereby suppress degradation of the capacity when cycles are repeated. The primary particle diameter of the inorganic filler in the layer (B) being 0.70 $\mu$m or less is preferable from the viewpoint of suppressing deformation at temperatures higher than the melting point of the layer (A). From the above viewpoints, the primary particle diameter of the inorganic filler in the layer (B) is more preferably 0.10 $\mu$m or more and 0.60 $\mu$m or less, still more preferably 0.10 $\mu$m or more and 0.50 $\mu$m or less, even still more preferably 0.10 $\mu$m or more and 0.49 $\mu$m or less.

The primary particle diameter of the inorganic filler in the layer (B) can be measured by a method described in examples mentioned below.

Examples of a method for adjusting the primary particle diameter of the inorganic filler in the layer (B) in a manner as described above include a method of pulverizing the inorganic filler using a ball mill, a bead mill, a jet mill, or the like to provide a desired particle size distribution and a method of preparing a plurality of fillers each having a different particle size distribution followed by blending.

The maximum particle diameter of the inorganic filler in the layer (B) is preferably 2.5 $\mu$m or less, more preferably 2.0 $\mu$m or less, still more preferably 1.5 $\mu$m or less, from the viewpoint of heat resistance. The maximum particle diameter can be measured by a method described in examples mentioned below.

The content of the inorganic filler in the layer (B) is, on the basis of the mass of the layer (B), preferably 80% by mass or more and 99% by mass or less, more preferably 85% by mass or more and 98% by mass or less, still more preferably 90% by mass or more and 98% by mass or less, even still more preferably 92% by mass or more and 98% by mass or less. The case where the content described above is 80% by mass or more is preferable from the viewpoint of ion permeability and from the viewpoint of suppressing deformation at temperatures higher than the melting point of the layer (A). The case where the content is 99% by mass or less is preferable from the viewpoint of maintaining the binding force among inorganic fillers or the interfacial binding force between the inorganic filler and the layer (A).

(Water-insoluble binder)

The water-insoluble binder in the layer (B) is defined as a particulate polymer that disperses in a particulate form in water and has a glass transition temperature of 10°C or less. Dispersion in a particulate form in water can be confirmed from, for example, but is not limited to, the particle diameter distribution of the water-insoluble binder being measurable in accordance with a method described in examples mentioned below, the insoluble matter being 90% by mass or more when 1.0 g of the dried polymer is dissolved in 100 g of water at 25°C, or the like. The water-insoluble binder is believed to bind the inorganic filler in a dotted form in the electrolyte solution, achieving both heat resistance and permeability. Specific examples of the water-insoluble binder include, but are not limited to, styrenebutadiene-based latexes, acrylonitrile-butadiene-based latexes, and acrylic latexes (such as methacrylic esteracrylic ester copolymers, styrene-acrylic ester copolymers, and acrylonitrile-acrylic ester copolymers). From the viewpoint of the degree of freedom of molecular design, an acrylic latex is preferable. Examples of an acrylic ester that may constitute the acrylic latex include, but are not limited to, (meth)acrylic alkyl esters such as methyl acrylate, methyl methacrylate, ethyl acrylate, ethyl methacrylate, butyl acrylate, butyl methacrylate, 2-ethylhexyl acrylate, and 2-ethylhexyl methacrylate. These acrylic alkyl esters may be used singly or in combinations of two or more.

The water-insoluble binder may contain a crosslinkable monomer unit from the viewpoint of making the amount of the insoluble content appropriate relative to the electrolyte solution. Examples of monomers that may constitute the crosslinkable monomer unit include, but are not particularly limited to, monomers having 2 or more radical-polymerizable double bonds and monomers having a functional group that gives a self-crosslinking structure during or after polymerization. These may be used singly or in combinations of two or more. Specific examples of the monomers described above include, but are not particularly limited to, polyfunctional (meth)acrylates such as polyoxyethylene diacrylate, polyoxyethylene dimethacrylate, polyoxypropylene diacrylate, polyoxypropylene dimethacrylate, neopentyl glycol dimethacrylate, trimethylolpropane triacrylate, and trimethylolpropane trimethacrylate. These may be used singly or in combinations of two or more.

From the viewpoint that the water-insoluble binder, even if swelled with the electrolyte solution, secures the binding force with the inorganic filler, the water-soluble binder, and the polyacrylic acid-based dispersant, and the layer (A) by hydrogen bonding, and further from the viewpoint of improving the binder strength in the electrolyte solution by suppressing the degree of swelling of the binder with the electrolyte solution, the water-insoluble binder is preferably an acrylic latex having a functional group that is hydrogenbonded to a carboxyl group, a carbonyl group, or a hydroxyl group, and/or an acrylic latex having a functional group that gives a self-crosslinking structure during or after polymerization. Examples of the acrylic latex include copolymers having a unit derived from acrylic acid or the like, a unit derived from acrylamide or the like and/or a unit derived from glycidyl (meth)acrylate, allylglycidyl ether, methylglycidyl acrylate, or the like, in addition to the unit derived from an acrylic ester mentioned above.

A method for polymerizing the copolymer as described above is, but is not particularly limited to, preferably emulsion polymerization. As a method of emulsion polymerization, a known method can be employed without particular limitation. A method for adding the monomer and other components is not particularly limited, and any of a batch-wise addition method, a portion-wise addition method, and a sequential addition method can be employed. As the polymerization method, any of single-stage polymerization, two-stage polymerization, or multistage polymerization of three or more stages can be employed.

The water-insoluble binders may be used singly or in combinations of two or more.

The volume average particle diameter of the water-insoluble binder is preferably from 10 to 500 nm from the viewpoint of binding force and permeability. When the volume average particle diameter described above is 10 nm or more, the pores of the layer (A) are prevented from being excessively blocked, and the permeability tends to be improved. When the volume average particle diameter is 500 nm or less, the binding force is prevented from decreasing, and the heat resistance tends to be improved. From the similar viewpoint, the particle diameter is more preferably from 20 to 350 nm, still more preferably 30 to 200 nm.

The volume average particle diameter can be measured by a method described in examples mentioned below and can be adjusted by, for example, the polymerization time, the polymerization temperature, the starting material compositional ratio, the order of adding starting materials, and the stirring speed during manufacture of the water-insoluble binder.

The glass transition temperature (Tg) of the water-insoluble binder is preferably -40°C or more and 10°C or less from the viewpoint of bindability. When the glass transition temperature is -40°C or more, the cohesion of the water-insoluble binder increases, and the heat resistance tends to be improved. When the glass transition temperature is 10°C or less, the tackiness of the water-insoluble binder is ensured, and the bindability tends to be improved. From the similar viewpoint, the glass transition temperature is more preferably -40°C or more and 0°C or less, still more preferably -40°C or more and -5°C or less.

The glass transition temperature can be measured by a method described in examples mentioned below.

The glass transition temperature can be adjusted by, for example, the polymerization time, the polymerization temperature, and the starting material compositional ratio during manufacture of the water-insoluble binder.

The content of the water-insoluble binder is, from the viewpoint of binding force and permeability, preferably from 1 to 12% by mass, more preferably from 1 to 10% by mass, still more preferably from 2 to 8% by mass, even still more preferably from 3 to 6% by mass or less, with respect to the content of the inorganic filler in layer (B) defined as 100% by mass.

(Water-soluble binder)

The water-soluble binder in the layer (B) is defined as a polymer that has a weight average molecular weight of 20,000 or more and leaves an insoluble matter of less than 1.0% by mass when 1.0 g thereof is dissolved in 100 g of water at 25°C. The water-soluble binder has a function of allowing the inorganic filler to be bound in a coating form in the electrolyte solution to contribute to heat resistance.

Specific examples of the water-soluble binder in the layer (B) of the first separator include, but are not limited to, polyvinyl alcohol (PVA), polyvinylpyrrolidone (PVP), cellulose ether, polyacrylamide, poly(meth)acrylic acid, polyvinylacetamide, polyethyleneimine, polyethylene oxide, polystyrene sulfonic acid, xanthan gum, and guar gum. Among these, from the viewpoint of developing strength in the electrolyte solution by a rigid molecular structure, cellulose ether is preferable, and sodium carboxymethylcellulose is especially preferable.

The water-soluble binder in the layer (B) of the second separator contains a cellulose ether. The water-soluble binder in the layer (B) of the second separator may contain PVA, PVP, polyacrylamide, poly(meth)acrylic acid, polyvinylacetamide, polyethyleneimine, polyethylene oxide, polystyrene sulfonic acid, xanthan gum, guar gum, or the like in addition to the cellulose ether.

Both in the first separator and the second separator, the water-soluble binders may be used singly or in combinations of two or more. The water-soluble binder also may be a copolymer of at least one selected from those described above and other copolymer component.

The weight average molecular weight can be measured by a method described in examples mentioned below and can be adjusted by, for example, the polymerization time, the polymerization temperature, the starting material compositional ratio, the order of adding starting materials, the stirring speed, and the like during manufacture of the water-soluble binder.

Incorporation of the water-soluble binder in the layer (B) can be detected by, for example, immersing the separator in water to dissolve the water-soluble component in the aqueous layer, filtering the aqueous layer component provided, measuring the molecular weight by gel permeation chromatography or the like, and analyzing the dried product of the aqueous layer component by an infrared spectrometer, a nuclear magnetic resonance apparatus, an energy dispersive X-ray spectrometer, or the like.

The degree of etherification of the cellulose ether is preferably 0.5 or more, more preferably 0.6 or more, preferably 1.5 or less, more preferably 1.0 or less. The degree of etherification refers to a degree of substitution of hydroxy groups per anhydrous glucose unit in cellulose into substitutes such as carboxymethyl groups. The degree of etherification may theoretically take a value of 0 to 3. When the degree of etherification is within the range described above, the solubility in water and binding strength of the cellulose ether tend to be excellent. The degree of etherification can be determined by, for example, neutralizationtitrating the ash of the cellulose ether.

The weight average molecular weight of the water-soluble binder is preferably 20,000 or more, more preferably 50,000 or more and preferably 600,000 or less, more preferably 400,000 or less. With the weight average molecular weight of the water-soluble binder equal to or higher than the lower limit value in the range, the strength of the water-soluble binder can be enhanced, and thus the binding strength can be enhanced and the heat resistance can be improved. With the weight average molecular weight equal to or lower than the upper limit value, an increase in the viscosity can be suppressed, and thus the coatability can be enhanced.

The content of the water-soluble binder is, from the viewpoint of permeability, heat resistance, and coatability, preferably from 0.05 to 2.4% by mass, more preferably from 0.1 to 2.4% by mass, still more preferably from 0.1 to 2.0% by mass, even still more preferably from 0.15 to 2.0% by mass, further preferably from 0.2 to 1.0% by mass, still further preferably from 0.3 to 0.8% by mass, with respect to the content of the inorganic filler in layer (B) defined as 100% by mass.

(Polyacrylic acid-based dispersant)

The polyacrylic acid-based dispersant in the layer (B) is defined as a polymer having an acrylic acid skeleton of a weight average molecular weight of 500 or more and 10,000 or less, which polymer leaves an insoluble matter of less than 1.0% by weight when 1.0 g thereof is dissolved in 100 g of water at 25°C. The polyacrylic acid-based dispersant adsorbs to the inorganic filler surface to contribute to the dispersibility and bindability in the electrolyte solution.

Specific examples of the polyacrylic acid-based dispersant in the layer (B) of the first separator include, but are not limited to, homopolymers and copolymers provided using acrylic acid, sodium acrylate, lithium acrylate, and ammonium acrylate as a monomer. Among these, from the viewpoint of the dispersibility and the low swellability to the electrolyte solution, the polyacrylic acid-based dispersant preferably contains at least one or more selected from the group consisting of a neutralized monovalent metal ion salt of polyacrylic acid and copolymers of a neutralized monovalent metal ion salt of acrylic acid and acrylic acid. Specific examples of such a polyacrylic acid-based dispersant include, but are not limited to, sodium polyacrylate and lithium polyacrylate.

The polyacrylic acid-based dispersant in the layer (B) of the second separator contains one or more selected from the group consisting of neutralized monovalent metal ion salt of polyacrylic acid and copolymers of a neutralized monovalent metal ion salt of acrylic acid and acrylic acid. The polyacrylic acid-based dispersant in the layer (B) of the second separator may contain homopolymers and copolymers provided using acrylic acid, sodium acrylate, lithium acrylate, and ammonium acrylate as a monomer, except for a neutralized monovalent metal ion salt of polyacrylic acid and copolymers of a neutralized monovalent metal ion salt of acrylic acid and acrylic acid.

Both in the first separator and the second separator, the polyacrylic acid-based dispersants may be used singly or in combinations of two or more.

Incorporation of the polyacrylic acid-based dispersant in the layer (B) can be detected by, for example, immersing the separator in water to dissolve the water-soluble component in the aqueous layer, filtering the aqueous layer component provided, measuring the molecular weight by gel permeation chromatography or the like, and analyzing the dried product of the aqueous layer component by an infrared spectrometer, a nuclear magnetic resonance apparatus, an energy dispersive X-ray spectrometer, or the like.

The weight average molecular weight of the polyacrylic acid-based dispersant is preferably 500 or more, more preferably 1,000 or more and preferably 10,000 or less, more preferably 8,000 or less. With the weight average molecular weight of the water-soluble binder equal to or higher than the lower limit value in the range, the steric stability of the polyacrylic acid-based dispersant adsorbed on inorganic filler can be enhanced, and thus the binding strength and heat resistance tend to be improved. With the weight average molecular weight equal to or lower than the upper limit value, an increase in the viscosity can be suppressed, and thus the coatability tends to be enhanced.

The weight average molecular weight can be measured by a method described in examples mentioned below and can be adjusted by, for example, the polymerization time, the polymerization temperature, the starting material compositional ratio, the order of adding starting materials, the stirring speed, and the like during manufacture of the polyacrylic acid-based dispersant.

The content of the polyacrylic acid-based dispersant is, from the viewpoint of improving the permeability and dispersibility, is preferably from 0.1 to 2.4% by mass, more preferably from 0.1 to 2.0% by mass, even still more preferably from 0.2 to 1.0% by mass, even still more preferably from 0.3 to 0.8% by mass, with respect to the content of the inorganic filler in layer (B) defined as 100% by mass.

(Physical properties of separator for electricity storage device)

(Heat shrinkage rate S1)

The heat shrinkage rate in propylene carbonate at 140°C S1 of the first separator is 5% or less. When the heat shrinkage rate S1 is 5% or less, even in combination with a positive electrode material having a high nickel content, deformation due to heating of the separator in the battery is suppressed, and accordingly short-circuiting between the positive and negative electrodes can be prevented. From such a viewpoint, the heat shrinkage rate S1 is preferably 5.0% or less, more preferably 4.5% or less, still more preferably 4.0% or less, even still more preferably 3.5% or less, further preferably 3.0% or less, still further preferably 2.50 or less, even further preferably 2.0% or less, yet still further preferably 1.50 or less, yet even still further preferably 1.0% or less, particularly preferably 0.50 or less.

In the second separator, although there is no intention to limit the heat shrinkage rate S1, the heat shrinkage rate S1 is preferably within the range mentioned above from the similar viewpoint as described above. That is, the heat shrinkage rate in propylene carbonate at 140°C S1 of the second separator is preferably 5% or less, more preferably 5.0% or less, still more preferably 4.0% or less, even still more preferably 3.5% or less, further preferably 3.0% or less, still further preferably 2.50 or less, even still further preferably 2.0% or less, yet still further preferably 1.50 or less, yet even still further preferably 1.0% or less, particularly preferably 0.50 or less.

The heat shrinkage rate S1 can be measured by a method described in examples mentioned below.

The heat shrinkage rate S1 tends to be within the range mentioned above by, for example, subjecting the surface of the layer (A) to a surface treatment such as a corona discharge treatment under preferable conditions mentioned below, using a water-insoluble binder, a water-soluble binder, and a polyacrylic acid-based dispersant in combination as the layer (B), and the like. The heat shrinkage rate S1 tends to be a further smaller value by adjusting the volume average particle diameter D50 of the inorganic filler to be within the preferable range mentioned above, in addition to the factors mentioned above.

(Heat shrinkage rate S2)

The heat shrinkage rate in air at 150°C S2 of the separator for an electricity storage device of the present embodiment is preferably 5% or less. When the heat shrinkage rate S2 is 5% or less, the safety tends to be more improved. From such a viewpoint, the heat shrinkage rate S2 is preferably 5.0% or less, still more preferably 4.0% or less, even still more preferably 3.5% or less, further preferably 3.0% or less, still further preferably 2.50 or less, even still further preferably 2.0% or less, yet still further preferably 1.50 or less, yet even still further preferably 1.0% or less, particularly preferably 0.50 or less.

The heat shrinkage rate S2 can be measured by a method described in examples mentioned below.

The heat shrinkage rate S2 tends to be within the range mentioned above by, for example, using a water-insoluble binder, a water-soluble binder, and a polyacrylic acid-based dispersant in combination as the layer (B), or the like. The heat shrinkage rate S2 tends to be a further smaller value by adjusting the volume average particle diameter D50 of the inorganic filler to be within the preferable range mentioned above, in addition to the factors mentioned above.

(Thickness)

The thickness T of the separator for an electricity storage device of the present embodiment is preferably 3 $\mu$m or more and 16 $\mu$m or less from the viewpoint of heat resistance, permeability, and battery capacity. More specifically, the thickness is preferably 3.0 $\mu$m or more and 16.0 $\mu$m or less. When the thickness T is 3 $\mu$m or more, the heat resistance tends to be improved, and when the thickness T is 16 $\mu$m or less, the permeability and battery capacity tend to be improved. From the similar viewpoint, the thickness T is more preferably 3 $\mu$m or more and 15 $\mu$m or less, still more preferably 3 $\mu$m or more and 14 $\mu$m or less. More specifically, the thickness T is more preferably 3.0 $\mu$m or more and 15.0 $\mu$m or less, still more preferably 3.0 $\mu$m or more and 14.0 $\mu$m or less.

From the viewpoint of the strength and safety, the ratio of the thickness of the layer (B) $T_B$ to the thickness T, $T_B/T$, is preferably from 0.1 to 0.3. More specifically, $T_B/T$ is preferably from 0.10 to 0.30. When $T_B/T$ is 0.3 or less, the strength tends to be improved, and when $T_B/T$ is 0.1 or more, the safety tends to be improved. From the similar viewpoint, $T_B/T$ is preferably from 0.14 to 0.27, still more preferably from 0.18 to 0.25.

The thickness T and $T_B/T$ can be measured by a method described in examples mentioned below.

(Puncture strength)

The puncture strength of the separator for an electricity storage device of the present embodiment is preferably 100 gf or more, more preferably 200 gf or more, still more preferably 250 gf or more, even still more preferably 300 gf or more, further preferably 350 gf or more, still further preferably 400 gf or more, particularly preferably 450 gf or more, from the viewpoint of suppressing a break of the separator in an impact test. From the viewpoint of stability on film formation of the layer (A), the puncture strength described above is preferably 1,000 gf or less, more preferably 900 gf or less.

The puncture strength can be measured by a method described in examples mentioned below.

The puncture strength can be adjusted by, for example, the molecular weight of the polyolefin resin composition of the layer (A), the mix proportion of the polyolefin resin composition and a plasticizer, the stretching temperature, and the stretching ratio.

(Basis weight-equivalent puncture strength)

The basis weight-equivalent puncture strength, of the separator for an electricity storage device of the present embodiment is preferably 20 gf/(g/m$^2$) or more. When the separator for an electricity storage device has a basis weight-equivalent puncture strength of 20 gf/(g/m$^2$) or more, the layer (A) tends to become difficult to break in an impact test of the electricity storage device. From the viewpoint of improving the safety, for example, impact resistance of the electricity storage device while maintaining the strength of the layer (A), the basis weight-equivalent puncture strength is more preferably 25 gf/(g/m$^2$) or more, still more preferably 35 gf/(g/m$^2$) or more, even still more preferably 40 gf/(g/m$^2$) or more, further preferably 45 gf/(g/m$^2$) or more, still further preferably 50 gf/(g/m$^2$) or more. The basis weight-equivalent puncture strength may be 150 gf/(g/m$^2$) or less, for example, may be 130 gf/(g/m$^2$) or less, may be 100 gf/(g/m$^2$) or less, but is not limited thereto.

The basis weight-equivalent puncture strength can be calculated by measuring the puncture strength and the basis weight according to a method described in examples mentioned below.

The basis weight-equivalent puncture strength can be adjusted by, for example, the molecular weight of the polyolefin resin composition of the layer (A), the mix proportion of the polyolefin resin composition and a plasticizer, the stretching temperature, the stretching ratio, and the basis weight of the layer (B).

(Air permeability)

The air permeability of the separator for an electricity storage device of the present embodiment is preferably from 30 to 500 seconds/100 cc from the viewpoint of lowering the resistance of the battery while the safety is ensured. When the air permeability is 30 seconds/100 cc or more, it is possible to effectively prevent a large current from flowing.

When the air permeability is 500 seconds/100 cc or less, the electric resistance of the battery tends to be lowered. From the similar viewpoint, the air permeability is more preferably from 50 to 500 seconds/100 cc, still more preferably from 50 to 400 seconds/100 cc, even still more preferably from 50 to 300 seconds/100 cc.

The air permeability can be measured by a method described in examples mentioned below.

The air permeability can be adjusted by, for example, the air permeability of the layer (A), the thickness of the layer (B), the volume average particle diameter of the inorganic filler, the content of the water-insoluble binder, water-soluble binder, and polyacrylic acid-based dispersant, or the like.

(Interfacial peel strength H)

The interfacial peel strength H between the layer (A) and the layer (B) in propylene carbonate of the second separator is 3 N/m or more from the viewpoint of heat resistance. From the similar viewpoint, the interfacial peel strength H of the second separator is preferably 4 N/m or more, more preferably 5 N/m or more, even still more preferably 8 N/m or more, further preferably 10 N/m or more, still further preferably 12 N/m or more. The interfacial peel strength H of the second separator is preferably 40 N/m or less from the viewpoint of permeability. From the similar viewpoint, the interfacial peel strength H is more preferably 35 N/m or less, still more preferably 25 N/m or less.

The reason why the second separator suppresses heat shrinkage in an electrolyte solution and can ensure safety even in combination with a positive electrode material having a high nickel content can be assumed as follows although there is no intention to limit it thereto. That is, the second separator has an interfacial peel strength H of 3 N/m or more. Thus, when the second separator is applied as a separator for an electricity storage device, the layer (B) is evaluated to strongly binds to the layer (A) even in the electrolyte solution to thereby allow the capacity of suppressing heat shrinkage possessed by the layer (B) containing a predetermined polyacrylic acid-based dispersant and water-soluble binder to develop more effectively. Thus, it is conceived that safety is to be ensured even when a high-nickel positive electrode is used.

In the first separator, the interfacial peel strength H is preferably within the range mentioned above from the similar viewpoint as above, although there is no intention to limit the interfacial peel strength H. That is, the interfacial peel strength H between the layer (A) and the layer (B) in propylene carbonate of the first separator is preferably 3 N/m or more from the viewpoint of heat resistance. From the similar viewpoint, the interfacial peel strength H of the first separator is more preferably 4 N/m or more, still more preferably 5 N/m or more, even still more preferably 8 N/m or more, further preferably 10 N/m or more, still further preferably 12 N/m or more. The interfacial peel strength H of the first separator is also preferably 40 N/m or less from the viewpoint of permeability. From the similar viewpoint, the interfacial peel strength H of the first separator is more preferably 35 N/m or less, still more preferably 25 N/m or less.

The interfacial peel strength H can be measured by a method described in examples mentioned below.

The interfacial peel strength H tends to be within the range mentioned above by, for example, subjecting the surface of the layer (A) to a surface treatment such as a corona discharge treatment under preferable conditions mentioned below, using a water-insoluble binder, a water-soluble binder, and a polyacrylic acid-based dispersant in combination as the layer (B), and the like. The interfacial peel strength H can be adjusted by the volume average particle diameter of the inorganic filler, the content of water-insoluble binder, water-soluble binder, and polyacrylic acid-based dispersant, or the like, in addition to the factors mentioned above.

[Method for manufacturing separator for electricity storage device]

A method for manufacturing the separator for an electricity storage device of the present embodiment can include, but are not particularly limited to, a step of producing a layer (A) and a step of forming a layer (B) on at least one surface of the layer (A).

In the step of producing a layer (A), various known methods can be employed. Examples thereof include:

(1) a method in which a polyolefin resin composition and a pore-forming material are melt-kneaded and formed into a sheet form, the sheet is stretched as required, and then the pore-forming material is extracted to make the sheet porous;

(2) a method in which a polyolefin resin composition is melt-kneaded and extruded at a high stretching ratio, and then peeling-off is made at a polyolefin-crystal interface by a heat treatment and stretching to make the extrudate porous;

(3) a method in which a polyolefin resin composition and an inorganic filler are melt-kneaded and formed into a sheet form, and then the polyolefin and the inorganic filler is peeled off at the interface therebetween by stretching to make the sheet porous; and

(4) a method in which a polyolefin resin composition is dissolved, and then the solution is immersed in a poor solvent to the polyolefin to coagulate the polyolefin, and the solvent is removed at the same time to thereby make the polyolefin porous.

Hereinafter, as an example of a method for manufacturing the layer (A), there will be described a method in which a polyolefin resin composition and a pore-forming material are melt-kneaded and formed into a sheet form, and then the pore-forming material is extracted therefrom.

First, a polyolefin resin composition and the pore-forming material described above are melt-kneaded. Examples of a method of melt-kneading include a method in which a polyolefin resin and other additives as required are placed in a resin kneading machine such as an extruder, a feeder, a Laboplasto mill, a kneading roll, or a Banbury mixer, and the pore-forming material in any proportion is introduced therein and kneaded while the resin component is heat-melt.

Examples of the pore-forming material include a plasticizer, an inorganic material, or a combination thereof.

Examples of the plasticizer include, but are not particularly limited to, nonvolatile solvents that may form a uniform solution at the melting point of the polyolefin or higher, including hydrocarbons such as liquid paraffin and paraffin wax; esters such as dioctyl phthalate and dibutyl phthalate; and higher alcohols such as oleyl alcohol and stearyl alcohol. Among the plasticizers, liquid paraffin is preferable because when the polyolefin resin is polyethylene and/or polypropylene, liquid paraffin has high compatibility with these, peeling-off at the interface between the resin and the plasticizer is unlikely to occur even when the melt-kneaded product is stretched, and uniform stretching tends to be easily achieved.

Examples of the inorganic material include, but are not particularly limited to, oxide-based ceramics such as alumina, silica (silicon oxide), titania, zirconia, magnesia, ceria, yttria, zinc oxide, and iron oxide; nitride-based ceramics such as silicon nitride, titanium nitride, and boron nitride; ceramics such as silicon carbide, calcium carbonate, aluminum sulfate, aluminum hydroxide, potassium titanate, talc, kaolin clay, kaolinite, halloysite, pyrophyllite, montmorillonite, sericite, mica, amesite, bentonite, asbestos, zeolite, calcium silicate, magnesium silicate, diatomaceous earth, and silica sand; and glass fiber. These are used singly or in combinations of two or more. Among these inorganic materials, from the viewpoint of electrochemical stability, silica, alumina, and titania are preferable, and in respect of easy extraction, silica is particularly preferable.

Next, the melt-kneaded product is molded into a sheet form. Examples of a method for manufacturing a sheet-like molded body include, but are not particularly limited to, a method in which a melt-kneaded product is extruded via a T-die or the like into a sheet form, and the sheet is brought into contact with a thermal conductor for cooling to a temperature sufficiently lower than the crystallization temperature of the resin component to thereby solidify the sheet. Examples of the thermal conductor for use in solidification by cooling include, but are not particularly limited to, metals, water, air, or plasticizers. Among these, metal rolls are preferably employed because of their high thermal conducting efficiency. Interposing the extruded kneaded product between rolls when the product is brought into contact with the metal rolls is preferable because the thermal conducting efficiency is further improved as well as the sheet is oriented to enhance the film strength and the surface smoothness of the sheet tends to be improved. The die lip interval on extruding the melt-kneaded product via a T-die into a sheet form is preferably 200 $\mu$m or more and 3,000 $\mu$m or less, more preferably 500 $\mu$m or more and 2,500 $\mu$m or less. When the die lip interval is 200 $\mu$m or more, gum and the like are reduced, influences on the quality of the film such as streaking and defects are fewer, and risks such a film break tend to be reduced in the subsequent stretching step. Meanwhile, when the die lip interval is 3,000 $\mu$m or less, the cooling rate is fast, uneven cooling can be prevented, and additionally there is a tendency that the thickness stability of the sheet can be maintained.

The sheet-like molded body also may be rolled. Rolling can be conducted by a press method using a double belt press, for example. Orientation of the surface layer portion tends to increase by conducting rolling. The rolling area ratio is preferably more than 1 time and 3 times or less, more preferably more than 1 time and 2 times or less. When the rolling ratio exceeds 1 time, the plane orientation increases, and the film strength of the layer (A) to be finally achieved tends to increase. Meanwhile, when the rolling ratio is 3 times or less, the differential orientation between the surface layer portion and the center inner portion is small, and there is a tendency that a porous structure uniform in the direction of the thickness of the film can be formed.

The pore-forming material is then removed from the sheet-like molded body to provide the layer (A). An example of a method of removing the pore-forming material includes a method in which the sheet-like molded body is immersed in an extraction solvent to extract the pore-forming material followed by sufficient drying. The method of extracting the pore-forming material may be conducted either in a batch or continuous manner. In order to suppress shrinkage of the layer (A), the ends of the sheet-like molded body are preferably restrained during a series of the immersion and drying steps. The amount of the pore-forming material remaining in the layer (A) is preferably set to less than 1% by mass based on the total mass of the layer (A).

As the extraction solvent employed for extracting the pore-forming material, preferably employed is an extraction solvent that is a poor solvent to the polyolefin resin and a good solvent to the pore-forming material and has a boiling point lower than the melting point of the polyolefin resin. Examples of such extraction solvents include, but are not particularly limited to, hydrocarbons such as n-hexane and cyclohexane; halogenated hydrocarbons such as methylene chloride and 1,1,1-trichloroethane; non-chlorine halogenated solvents such as hydrofluoroether and hydrofluorocarbon;

alcohols such as ethanol and isopropanol; ethers such as diethyl ether and tetrahydrofuran; and ketones such as acetone and methyl ethyl ketone. These extraction solvents may be recovered by an operation such as distillation and reused. When an inorganic material is employed as the pore-forming material, an aqueous solution of sodium hydroxide, potassium hydroxide, or the like may be employed as the extraction solvent.

The sheet-like molded body or the layer (A) is preferably stretched. Stretching may be conducted before the pore-forming material is extracted from the sheet-like molded body. Alternatively, stretching may be conducted on the layer (A) provided by extracting the pore-forming material from the sheet-like molded body. Further, stretching may be conducted before and after the pore-forming material is extracted from the sheet-like molded body.

As a stretching treatment, either uniaxial stretching or biaxial stretching can be suitably employed. From the viewpoint of improving the strength or the like of the layer (A) to be provided, biaxial stretching is preferable. When the sheet-like molded body is biaxially stretched at a high ratio, the molecules are oriented in the plane direction, the layer (A) to be finally provided becomes difficult to tear and will have a high puncture strength.

Examples of a stretching method include methods of simultaneous biaxial stretching, sequential biaxial stretching, multiple-stage stretching, and multiple-time stretching. From the viewpoint of an improvement in the puncture strength, uniform stretching, and shutdown properties, simultaneous biaxial stretching is preferable. From the viewpoint of ease of control of the plane orientation, sequential biaxial stretching is preferable.

The simultaneous biaxial stretching here refers to a stretching method in which MD (the machine direction when the layer (A) is continuously molded) stretching and TD (the direction traversing the MD of the layer (A) at an angle of 90°) stretching are simultaneously conducted, and the stretching ratios in the directions may be different. The sequential biaxial stretching refers to a stretching method in which MD stretching and TD stretching are independently conducted, and when stretching is conducted in the MD or TD, the layer (A) is in a non-restrained state or in a state of being fixed at a constant length in the other direction.

The stretching ratio, in terms of an area magnification, is preferably in the range of 20 times or more and 100 times or less, more preferably in the range of 25 times or more and 70 times or less. The stretching ratio in each axial direction is preferably in the ranges of 4 times or more and 10 times or less in the MD and 4 times or more and 10 times or less in the TD, more preferably in the ranges of 5 times or more and 8 times or less in the MD and 5 times or more and 8 times or less in the TD. When the total area ratio is 20 times or more, there is a tendency that sufficient strength can be imparted to the layer (A) to be provided. Meanwhile, when the total area ratio is 100 times or less, a film break in the stretching step is prevented, and high productivity tends to be provided.

The layer (A) is preferably subjected to a heat treatment for the purpose of heat setting from the viewpoint of suppressing shrinkage. Examples of the method of the heat treatment include a stretching operation conducted in a predetermined temperature atmosphere and at a predetermined stretching ratio in order to adjust the physical properties, and/or a relaxation operation conducted in a predetermined temperature atmosphere and at a predetermined relaxation ratio in order to reduce the stretching stress. The relaxation operation may be conducted after the stretching operation is conducted. These heat treatments can be conducted using a tenter or a roll stretching machine.

In the stretching operation, stretching of 1.1 times or more, more preferably 1.2 times or more, is preferably conducted in the MD and/or TD of the film from the viewpoint of providing a layer (A) having further higher strength and higher porosity.

The relaxation operation is a reduction operation in the MD and/or TD of the film. The relaxation rate is a value obtained by dividing the size of the film after the relaxation operation by the size of the film before the relaxation operation. When relaxation is conducted both in the MD and TD, the relaxation ratio is a value obtained by multiplying the MD relaxation ratio and the TD relaxation ratio. The relaxation ratio is preferably 1.0 or less, more preferably 0.97 or less, further preferably 0.95 or less. The relaxation ratio is preferably 0.5 or more from the viewpoint of film quality. The relaxation operation may be conducted in both directions, the MD and TD, or may be conducted in only one direction, the MD or TD.

These stretching and relaxation operations after plasticizer extraction are preferably conducted in the TD from the viewpoint of process control and from the viewpoint of controlling pore areas in a 400°C solder test. The temperature in the stretching and relaxation operations is preferably lower than the melting point of the polyolefin resin (hereinafter also referred to as "Tm"), more preferably in the range of 1°C to 25°C lower than Tm. The temperature in the stretching and relaxation operations in the above range is preferred from the viewpoint of the balance between heat shrinkage rate reduction and porosity.

Next, a layer (B) is formed on at least one surface of the layer (A). In the step of forming a layer (B), for example, a coating liquid forming the layer (B) is applied onto the layer (A). In the present embodiment, from the viewpoint of adjusting the heat shrinkage rate S1 within a desired range, the surface of the layer (A) on the layer (B) side is preferably hydrophilized by a corona discharge treatment or the like before the step of forming a layer (B) is conducted. As such a hydrophilization treatment, from the viewpoint of homogeneity of the treatment, a corona discharge treatment or plasma treatment is preferable, and a corona discharge treatment is more preferable. In conducting a corona discharge treatment, treatment conditions are preferable under which the absorption peak ratio at 1734 cm$^{-1}$/2918 cm$^{-1}$, which is obtained

by measuring the surface of the layer (A) on the layer (B) side with ATR-IR, reaches 0.025 to 0.125. Such treatment conditions are not particularly limited and can be adjusted by the corona treatment intensity, the distance from the discharge electrode to the layer (A), and the like. For example, the corona treatment intensity is preferably set to 1 W/ $(m^2/min)$ to 50 W/ $(m^2/min)$ . When the corona treatment intensity is 1 W/ $(m^2/min)$ or more, discharge to the layer (A) tends to be stably conducted. When the corona treatment intensity is 50 W/ $(m^2/min)$ or less, discharge damage to the layer (A) is smaller, and the voltage resistance of the separator tends to be excellent. From the similar viewpoint, the absorption peak ratio is more preferably from 3 W/ $(m^2/min)$ to 45 W/ $(m^2/min)$, still more preferably from 5 W/ $(m^2/min)$ to 35 W/ $(m^2/min)$, even still more preferably from 7 W/ $(m^2/min)$ to 30 W/ $(m^2/min)$, further preferably from 9 W/ $(m^2/min)$ to 25 W/ $(m^2/min)$, still further preferably from 11 W/ $(m^2/min)$ or more and less than 20 W/ $(m^2/min)$, particularly preferably from 13 W/ $(m^2/min)$ to 15 W/ $(m^2/min)$ .

The hydrophilization described above also can be conducted by a plasma treatment. In such a case, the operating conditions for the plasma treatment are preferably treatment conditions under which the absorption peak ratio at 1734 cm$^{-1}$/2918 cm$^{-1}$, which is obtained by measuring the surface of the layer (A) on the layer (B) side with ATR-IR, reaches 0.025 to 0.125. The treatment conditions are not particularly limited. In consideration that increasing the voltage applied during the plasma treatment tends to increase the value of the absorption peak ratio, the conditions can be appropriately adjusted.

As a coating liquid for forming the layer (B), a coating liquid containing an inorganic filler, a water-insoluble binder, a water-soluble binder, and a polyacrylic acid-based dispersant can be used. A layer (B) containing an inorganic filler, a water-insoluble binder, a water-soluble binder, and a polyacrylic acid-based dispersant is formed by the use of these components in combination, and as a result, the heat shrinkage rate S1 of the separator for an electricity storage device at 140°C in propylene carbonate becomes 5% or less. Applying the coating liquid onto the layer (A) followed by drying enables the solvent of the coating liquid to be removed and the layer (B) to be formed to thereby provide the separator for an electricity storage device of the present embodiment.

The coating liquid preferably contains water from the viewpoint of homogeneously dispersing and dissolving the inorganic filler, the water-insoluble binder, the water-soluble binder, and the polyacrylic acid-based dispersant. Besides water, a solvent such as methanol, ethanol, and isopropyl alcohol may be contained as long as the solubility and dispersibility are not impaired.

To the coating liquid, various additives including a thickener such as a surfactant; a humectant; an antifoaming agent; a pH adjuster including acid and alkali, and a crosslinking agent may be added for improving the dispersion stabilization or coatability, further for adjusting the contact angle of the surface portion of the layer (B), and for crosslinking of the binder in order to improve the heat resistance. The total amount of these additives to be added, in terms of their active component (when the additives are dissolved in a solvent, the mass of the dissolved additive components) is preferably 20 parts by mass or less, more preferably 10 parts by mass or less, still more preferably 5 parts by mass or less, even still more preferably 3 parts by mass or less, further preferably 1 parts by mass or less, still further preferably 0.5 parts by mass or less, based on 100 parts by mass of the inorganic filler.

As for the additives, examples of anionic surfactants include higher fatty acid salts, alkyl sulfonates, alpha-olefin sulfonates, alkane sulfonates, alkyl benzene sulfonates, sulfosuccinic ester salts, alkylsulfuric ester salts, alkylether sulfuric ester salts, alkyl phosphoric ester salts, alkylether phosphoric ester salts, alkylether carboxylates, alfa-sulfo-fatty acid methyl ester salts, and methyltaurates. Examples of nonionic surfactants include glycerin fatty acid esters, polyglycerin fatty acid esters, sucrose fatty acid esters, sorbitan fatty acid esters, polyoxyethylene sorbitan fatty acid esters, polyoxyethylene alkyl ethers, polyoxyethylene alkylene alkyl ethers, polyoxyethylene-polyoxypropylene alkyl ethers, polyoxyethylene alkyl phenyl ethers, polyoxyethylene fatty acid esters, fatty acid alkanol amides, and alkyl glucosides. Examples of amphoteric surfactants include alkyl betaines, fatty acid amidopropyl betaines, and alkylamine oxides. Examples of cationic surfactants include alkyl trimethyl ammonium salts, dialkyl dimethyl ammonium salts, alkyl dimethyl benzyl ammonium salts, and alkyl pyridinium salts. Other examples include fluorine-based surfactants and polymeric surfactants such as cellulose derivatives, polycarboxylates, and polystyrene sulfonates. Examples of crosslinking agents include epoxy-based crosslinking agents, oxazoline-based crosslinking agents, and metal chelate-based crosslinking agents. Examples of metal chelate-based crosslinking agents include, but are not particularly limited to, ammonium zirconium carbonate.

A method of dispersing and dissolving an inorganic filler and a polyacrylic acid-based dispersant in the medium of an application liquid is not particularly limited as long as the method enables dispersion properties of an application liquid required for the coating step to be achieved. Examples thereof include mechanical stirring with a ball mill, a bead mill, a planetary ball mill, a vibration ball mill, a sand mill, a colloid mill, an attritor, a roll mill, a high-speed impeller dispersion, a disperser, a homogenizer, a high-speed impact mill, an ultrasonic dispersion, and a stirring blade.

A method of applying the coating liquid onto the layer (A) is not particularly limited as long as the method enables a necessary layer thickness or a coating area to be achieved. Examples thereof include a gravure coater method, a small-diameter gravure coater method, a reverse-roll coater method, a transfer roll coater method, a kiss coater method, a dip coater method, a knife coater method, an air doctor coater method, a blade coater method, a rod coater method, a squeeze coater method, a cast coater method, a die coater method, a screen printing method, and a spray coating method.

A method of removing the solvent from the coated film after coating is not particularly limited as long as the method does not adversely affect the layer (A). Examples thereof include a method of drying at a temperature equal to or lower than the melting point of the materials constituting the layer (A) while the layer (A) is fixed and a method of drying under reduced pressure at a low temperature. Alternatively, the solvent may be allowed to partially remain as long as the device characteristics are not significantly affected.

[Optional layer]

In the separator for an electricity storage device described above, an optional layer may be further provided on the surface of either the layer (A) or the layer (B). That is, when the layer (B) is disposed on one surface of the layer (A), an aspect in which an optional layer is provided on the surface of the layer (B), an aspect in which an optional layer is provided on the surface of the layer (A), and an aspect in which optional layers are provided on the surfaces of both the layer (A) and the layer (B) are further encompassed by the present embodiment. When the layers (B) are disposed on both the surfaces of the layer (A), both of an aspect in which an optional layer is provided on the surface of one layer (B) and an aspect in which optional layers are provided on the surfaces of both the layers (B) are further encompassed by the present embodiment.

Examples of the optional layer include a thermoplastic polymer-containing layer that may function as an adhesive layer. The existence form (pattern) of the thermoplastic polymer-containing layer may be, for example, a state in which thermoplastic polymers are present mutually in dispersion over the entire surface of the multilayer porous film or may be a state in which the polymers are present in a sea-island form. When the thermoplastic polymers are present in a sea-island form, examples of the arrangement pattern thereof include a dot form, a stripe form, a lattice form, a stripe form, a hexagonal form, a random form, and combinations thereof. In addition to these, examples of the optional layer include porous layers not falling within the layer (B) in the present embodiment.

The type, total number, existence form (pattern), and thickness of these optional layers are not particularly limited and can be appropriately adjusted in consideration that those are allowed to fall within a range in which effects of the present embodiment are not impaired.

[Electricity storage device]

The electricity storage device of the present embodiment includes the separator for an electricity storage device of the present embodiment. Typical examples of the configuration of the electricity storage device of the present embodiment include, but are not limited to, ones comprising a positive electrode, a separator for an electricity storage device, a negative electrode, and as desired, an electrolyte solution.

Specific examples of the electricity storage device include a lithium battery, a lithium secondary battery, a lithium ion secondary battery, a sodium secondary battery, a sodium ion secondary battery, a magnesium secondary battery, a magnesium ion secondary battery, a calcium secondary battery, a calcium ion secondary battery, an aluminum secondary battery, an aluminum ion secondary battery, a nickel hydrogen battery, a nickel cadmium battery, an electrical double layer capacitor, a lithium ion capacitor, a redox flow battery, a lithium sulfur battery, a lithium-air battery, and a zinc air battery. Among these, from the viewpoint of practicality, a lithium battery, a lithium secondary battery, a lithium ion secondary battery, a nickel hydrogen battery, or a lithium ion capacitor is preferable, and a lithium ion secondary battery is more preferable.

As the positive electrode, negative electrode, electrolyte solution, and other electricity storage device members, various known ones can be appropriately used in accordance with the type of the electricity storage device.

The separator for an electricity storage device of the present embodiment can ensure safety even in combination with a positive electrode material having a high nickel content. Thus, in the electricity storage device of the present embodiment comprising the separator for an electricity storage device, a positive electrode material having a high nickel content is preferably applied to the positive electrode. That is, the electricity storage device of the present embodiment is preferably an electricity storage device comprising a positive electrode containing Li, Co, and Ni, a negative electrode opposed to the positive electrode, and the separator for an electricity storage device according to any one of claims 1 to 13, disposed between the positive electrode and the negative electrode, wherein the content ratio of each of the Co and Ni in the metals other than Li in the positive electrode is preferably 20 mol% or less and 60 mol% or more.

In the present embodiment, from the viewpoint of battery stability and costs, the content ratio of Co is preferably from 0.1 to 20 mol%. When the content ratio of Co is 20 mol% or less, there is a tendency of enabling the manufacture cost to be reduced. When the content ratio of Co is 0.1 mol% or more, the battery stability tends to be improved. From the similar viewpoint, the content ratio of Co is more preferably from 1 to 15 mol%, still more preferably from 3 to 10 mol%.

In the present embodiment, from the viewpoint of battery stability and battery capacity, the content ratio of Ni is from 60 to 99 mol%. When the content ratio of Ni is 60 mol% or more, the battery capacity tends to be improved. When the content ratio of Ni is 99 mol% or less, the battery stability tends to be improved. From the similar viewpoint, the content ratio of Ni is more preferably from 70 to 97 mol%, still more preferably from 80 to 95 mol%.

Examples

Hereinafter, the present invention will be described more concretely using examples and comparative examples. The present invention is not limited to the following examples in any way.

Various physical properties were measured and evaluated by the following measurement methods and evaluation methods. Unless otherwise specified, evaluations were conducted under an environment having a temperature of 23°C and a humidity of 40%.

[Thickness ($\mu$m)]

The thickness of each layer was measured at room temperature 23±2°C using a microthickness meter "KBM(R)" manufactured by Toyo Seiki Seisaku-sho, Ltd.

[Porosity (%)]

A 10-cm square specimen was cut off from the layer (A), the volume ($cm^3$) and mass (g) thereof were determined, and the porosity was calculated from those and the density ($g/cm^3$) using the following equation.

$$\text{Porosity (\%)} = (\text{volume} - \text{mass/density})/\text{volume} \times 100$$

[Air permeability (100 cc/sec)]

Measurement was conducted in accordance with JIS P-8117. That is, the air resistance of the layer (A) or the separator was measured using a Gurley-type air permeability meter "G-B2(R)" manufactured by Toyo Seiki Seisaku-sho, Ltd. under an atmosphere having a temperature of 23°C and a humidity of 40%, and defined as the air permeability.

[Basis weight ($g/m^2$)]

A 10-cm square specimen was cut off from the layer (A) or the separator, and the mass thereof was measured using an electronic balance AEL-200 (trade name) manufactured by Shimadzu Corporation. The mass provided was multiplied by 100 to calculate the basis weight ($g/m^2$) of the specimen per 1 $m^2$.

[Puncture strength (gf)]

A handy compression tester KES-G5(R) manufactured by Kato Tech Co. was used to fix the layer (A) or the separator with a specimen holder having a diameter of 11.3 mm at the aperture. Next, the center portion of the surface of the layer (A) or the surface of the separator (on the layer (A) side) fixed was subjected to a puncture test with a radius of curvature of the needle tip of 0.5 mm and at a puncture speed of 2 mm/sec under an atmosphere having a temperature of 23°C and a humidity of 40%, and the puncture strength (gf) as the maximum puncture load was provided.

Additionally, the basis weight-equivalent puncture strength ($gf/(g/m^2)$) was calculated based on the value of the basis weight measured as mentioned above.

[Absorption peak ratio]

A single reflection ATR method at an incident angle of 45 degrees was used onto the corona-treated surface of the layer (A) using 670-IR manufactured by Agilent Technologies, Ltd. to collect an IR spectrum at a cumulative number of 256 and a resolution of 4 $cm^{-1}$. The chart provided was subjected to a linear baseline correction using analysis software: Agilent Resolution Pro with correction points set at 1600 $cm^{-1}$, 1900 $cm^{-1}$, 2700 $cm^{-1}$, and 3000 $cm^{-1}$. Peaks were detected from the spectrum provided, and the ratio of the absorption peak strength at 1734 $cm^{-1}$ derived from carbonyl groups formed by the surface treatment to the absorption peak strength at 2918 $cm^{-1}$ derived from polyethylene contained in the layer (A) was defined as the absorption peak ratio.

[Volume average particle diameter of inorganic filler]

The coating liquid was subjected to laser particle size distribution measurement. That is, the volume average particle diameter distribution of the inorganic filler was measured using a measurement apparatus (trade name "Microtrac MT3300EX") manufactured by MicrotracBEL Corp. The particle diameter distribution of the inorganic filler was adjusted as required using the particle diameter distribution of water or the water-insoluble binder as the baseline. The particle diameter at which the cumulative frequency reached 50% (D50 particle diameter) was defined as the volume average particle diameter of the inorganic filler.

[Particle diameter of inorganic filler redispersed from layer (B)]

The inorganic filler in the layer (B) of the separator was redispersed and subjected to laser particle size distribution measurement. Specifically, the separator cut out to a size of 100 cm$^2$ was immersed for 24 hours in 10 mL of an aqueous solution in which ammonium polycarboxylate ("SN Dispersant 5468" manufactured by SAN NOPCO LIMITED) as a dispersant was adjusted in terms of solid content to 1 wt%. Then, the layer (B) was scraped off with a spatula or the like and used as a sample. The particle diameter distribution of the inorganic filler was measured using a measurement apparatus manufactured by MicrotracBEL Corp (trade name "Microtrac MT3300EX"). Before the particle diameter measurement, ultrasonic irradiation was conducted for 70 seconds with an ultrasonic irradiator attached to the apparatus to redisperse the inorganic filler. The value of the peak top of the particle diameter distribution, provided at this time, was adopted as the particle diameter of the inorganic filler redispersed from the layer (B). When 2 or more peaks were formed due to aggregation of the redispersed particles, the peak having the smallest particle diameter was adopted.

[Primary particle diameter of inorganic filler in layer (B)]

The separator was freeze-fractured and subjected to a conductive treatment with a C paste and Os coating. Thereafter, an electronic image of the cross-sectional SEM image of the layer (B) was shot in 3 fields of view with the acceleration voltage set at 1.0 kV and the shooting magnification set at 10,000 to 30,000 times (optionally set in accordance with the particle diameter so as to allow 10 or more particles to be observed), using a surface scanning electron microscope (HITACHI S-4800 manufactured by Hitachi High-Technologies Corporation). The "primary particle diameter" was defined as the particle diameter in a state where individual particles are singly dispersed in the matrix, or as the maximum particle diameter constituted therein even if the particles were aggregated. 10 diameters of circles circumscribing the individual inorganic fillers present in the field of view observed were randomly measured, and the average value thereof was adopted.

[Maximum particle diameter of inorganic filler in layer (B)]

The separator was freeze-fractured and subjected to a conductive treatment with a C paste and Os coating. Thereafter, an electronic image of the cross-sectional SEM image of the layer (B) was shot in 3 fields of view with the acceleration voltage set at 1.0 kV and the shooting magnification set at 10,000 to 30,000 times (optionally set in accordance with the particle diameter so as to allow 10 or more particles to be observed), using a surface scanning electron microscope (HITACHI S-4800 manufactured by Hitachi High-Technologies Corporation). The diameters of circles circumscribing individual inorganic fillers present in the field of view observed were measured, and the maximum value was defined as the maximum particle diameter of the inorganic filler.

[Volume average particle diameter of water-insoluble binder]

A water dispersion containing the water-insoluble binder was subjected to particle diameter measurement by a light scattering method. That is, the volume average particle diameter of the water-insoluble binder distribution was measured using a measurement apparatus manufactured by Leeds & Northrup Co. (trade name "MICROTRAC UPA150"). The particle diameter at which the cumulative frequency reached 50% (D50 particle diameter) was defined as the volume average particle diameter of the water-insoluble binder.

[Glass transition temperature of water-insoluble binder]

An appropriate amount of a water dispersion of the water-insoluble binder was placed in an aluminum pan and dried in a hot-air dryer at 130°C for 30 minutes. About 10 mg of the dried coating after drying was packed into an aluminum container for measurement, and a DSC curve and a DDSC curve under a nitrogen atmosphere were provided in a DSC measurement apparatus (model: DSC6220 manufactured by Shimadzu Corporation). The measurement conditions were as follows.

(First stage temperature increase program)

The program was started at 70°C, and the temperature was allowed to increase at a rate of 15°C per minute. After 110°C was reached, the temperature was maintained for 5 minutes.

(Second stage temperature decrease program)

The temperature was allowed to decrease from 110°C at a rate of 30°C per minute. After -50°C was reached, the temperature was maintained for 4 minutes.

(Third stage temperature increase program)

The temperature was allowed to increase from -50°C at a rate of 15°C per minute. During this third stage temperature increase, data for DSC and DDSC were acquired.
The intersection between the straight line obtained by extending the baseline in the DSC curve provided to the higher temperature side and the tangent on the inflection point was defined as the glass transition temperature (Tg).

[Weight average molecular weight of water-soluble binder and polyacrylic acid-based dispersant]

The water-soluble binder or the polyacrylic acid-based dispersant was dried at 130°C for 5 hours and used as a specimen. After 0.1 g of the specimen was dissolved in 100 mL of an eluant, the solution was filtered using a membrane filter to prepare a measurement sample. The weight average molecular weight (Mw) of each measurement sample was subjected to measurement in gel permeation chromatography ("Chromaster" manufactured by Hitachi High-Tech Science Corporation).

Column: GF-710HQ, 310HQ
Eluant (water-soluble binder): 50 mM NaCl aqueous solution
Eluant (polyacrylic acid-based dispersant): 50 mM phosphate buffer solution (pH 7.0)/acetonitrile = 90/10
Calibration curve: EasiVial PEG/PEO (polyethylene glycol/oxide)

[Interfacial peel strength H]

The separator was fixed on a stainless plate with an ethylene-vinyl acetate copolymerized resin (EVA resin) such that the layer (B) was positioned above. Propylene carbonate was added dropwise on the separator to an extent where the specimen was immersed therein, and the specimen was allowed to stand for 24 hours. Thereafter, extra liquid attached to the surface was removed to provide a measurement sample. The sample was subjected to measurement under an environment having a temperature of 23°C and a humidity of 40% using a NN-04 type SAICAS (Surface And Interfacial Cutting Analysis System) manufactured by Daipla Wintes Co., Ltd. Specifically, the layer (B) was cut with a diamond cutting blade having a width of 1 mm while the blade was controlled at a speed of 0.1 $\mu$m/s in the vertical direction and of 2 $\mu$m/s in the horizontal direction. The cutting was conducted in advance until the amount of displacement in the vertical direction reached the thickness of the layer (B).
After the cutting blade reached the interface between the layer (A) and the layer (B), the average value of the horizontal forces per unit width of the cutting blade measured during peeling while the coated layer was peeled at a speed of 2 $\mu$m/s in the horizontal direction for 10 seconds was adopted as the value of the interfacial peel strength H between the layer (A) and the layer (B) in propylene carbonate.

[Heat shrinkage rate S1 (%)]

The separator was cut off in a size of 50 mm in the MD and 50 mm in the TD, and the cut separator was interposed between Teflon sheet (thickness: 100 $\mu$m, a 60-mm square). This laminate was set in a package composed of an aluminum laminate film (thickness: 35 $\mu$m, a 100-mm square), 0.5 mL of propylene carbonate was poured therein to immerse the separator in propylene carbonate, and the remaining one side was sealed to prepare a sample. The sample was allowed to stand and stored for 24 hours and then allowed to stand in a 140°C oven for an hour. The sample was taken out of the oven and cooled. Then, the length (mm) of the separator in each direction was measured, and the heat shrinkage rate was calculated by the following equation. The measurement was conducted in the MD and TD, and the larger numerical value was adopted.

$$\text{Heat shrinkage rate S1 (\%)} = \{(50 - \text{length after heating})/50\} \times 100$$

[Heat shrinkage rate S2 (%)]

The separator was cut off in a size of 100 mm in the MD and 100 mm in the TD, and the cut separator was allowed to stand in a 150°C oven for an hour. At this time, the sample was interposed between 2 paper sheets such that hot air was not applied directly to the sample. The sample was taken out of the oven and cooled. Then, the length (mm) of the separator in each direction was measured, and the heat shrinkage rate was calculated by the following equation. The measurement was conducted in the MD and TD, and the larger numerical value was adopted.

$$\text{Heat shrinkage rate S2 (\%)} = \{(100 - \text{length after heating})/100\} \times 100$$

[Safety evaluation 1 (oven heating test)]

(1) Production of positive electrode
85 parts by mass of lithium nickel manganese cobalt composite oxide ($LiNi_{0.8}Mn_{0.1}Co_{0.1}$) powder as a positive electrode active material, 6 parts by mass of acetylene black as a conductive assistant, and 9 parts by mass of polyvinylidene fluoride (PVdF) as a binder were mixed until homogeneous in N-methyl-2-pyrrolidone (NMP) as a solvent to prepare a positive electrode mixture-containing paste. This positive electrode mixture-containing paste was applied onto both surfaces of a 20-$\mu$m thick collector comprising aluminum foil followed by drying. Then, the collector was compression-molded by a roll press to adjust the thickness of the positive electrode mixture layers such that the total thickness thereof reached 130 $\mu$m. A positive electrode (a positive electrode sheet) was produced by using a rectangular sheet having minor sides of 90 mm and major sides of 150 mm and attaching a 20-mm long aluminum foil not coated with the active material as a lead tub to the upper portion of a minor side.
(2) Production of negative electrode
91 parts by mass of graphite as a negative electrode active material and 9 parts by mass of PVdF as a binder were mixed until homogeneous in NMP as a solvent to prepare a negative electrode mixture-containing paste. This negative electrode mixture-containing paste was applied to both surfaces of a 10-m thick collector comprising copper foil followed by drying. Then, the collector was compression-molded by a roll press to adjust the thickness of the negative electrode mixture layer such that the total thickness thereof reached 130 $\mu$m. A negative electrode (a negative electrode sheet) was produced by using a rectangular sheet having minor sides of 90 mm and major sides of 150 mm and attaching a 20-mm long copper foil coated with no active material as a lead tub to the upper portion of a minor side.
(3) Preparation of non-aqueous electrolyte solution
A non-aqueous electrolyte solution was prepared by dissolving $LiPF_6$ as a solute at a concentration of 1.0 mol/liter in a mixed solvent of ethylene carbonate:ethylmethyl carbonate:dimethyl carbonate = 1:1:1 (volume ratio).
(4) Production of cell
73 of the positive electrode sheets and 74 of the negative electrode sheets described above were alternately stacked while the sheets were each isolated with a separator to produce an electrode plate laminate. The separator, which was a 155-mm width separator in a strip form, was folded alternately in zigzag to produce the electrode plate laminate. This electrode plate laminate was pressed into a flat plate form, the flat plate was set in an aluminum laminate film, and 3 sides of the film was heat-sealed. The positive electrode lead tubs and negative electrode lead tubs were brought out from one side of the laminate film. Further, after drying, the non-aqueous electrolyte solution was poured into this container, and the remaining one side was sealed. The lithium ion secondary battery thus produced was designed to have a capacity of 40 Ah.
(5) Heating test
The lithium ion secondary battery produced as described as above was charged to a battery voltage of 4.2 V at a discharge current of 0.5 C under an environment of 25°C. The battery charged was placed in an oven, subjected to temperature increase from room temperature to 150°C at 5°C/minute and left at 150°C for a predetermined time, and the ignition condition was examined. The test results were evaluated in accordance with the following criteria.

S: Did not ignite with a leaving time of 90 minutes or more.
A: Ignited with a leaving time of 70 minutes or more and less than 90 minutes.
B: Ignited with a leaving time of 50 minutes or more and less than 70 minutes.
C: Ignited with a leaving time of 30 minutes or more and less than 50 minutes.
D: Ignited during the temperature increase or with a leaving time of less than 30 minutes.

[Safety evaluation 2 (impact test)]

The lithium ion secondary battery produced in the safety evaluation 1 described above was charged to 4.2 V at a constant current of 0.5 C under an environment of 25°C.

Next, under an environment of 25°C, the lithium ion secondary battery after the charging was placed horizontally on a flat plate, and a stainless round rod having a diameter of 15.8 mm was disposed so as to traverse the center portion of the battery. The round rod was disposed such that its major axis was parallel with the longitudinal direction of the separator. An 18.2-kg weight was dropped from a height of 61 cm such that an impact was applied from the round rod disposed on the center portion of the battery perpendicularly in the vertical axis direction of the battery. After the collision, the surface temperature of the battery was measured. The test was conducted on 5 cells at time, and evaluation was conducted in accordance with the following criteria. As the surface temperature of the battery, a temperature measured at a position 1 cm from the bottom side of the outer packaging of the battery with a thermocouple (type K-seal type) was used.

A: The surface temperature was 30°C or less in all the cells.
B: Some cell had a surface temperature of more than 30°C and 100°C or less, but the surface temperature was 100°C or less in all the cells.
C: No ignition occurred, but the surface temperature exceeded 100°C in one or more cells.
D: Ignition occurred in one or more cells.

[Rate characteristics]

By a method in which the lithium ion secondary battery produced in the safety evaluation 1 described above was charged at 25°C at a discharge current of 0.5 C to a battery voltage 4.2 V, and further, reduction in the current value was started from 3 mA while 4.2 V was retained, first charging after the production of the battery was conducted for 6 hours in total, and thereafter, at a current, discharge was conducted to the battery voltage of 3.0 V.

Next, by a method in which charging was conducted at 25°C at a current value of 6 mA (about 1.0 C) to a battery voltage of 4.2 V, and further, reduction in the current value was started from 6 mA while 4.2 V was retained, charging was conducted for 3 hours in total, and thereafter, discharging was conducted at a current value of 60 mA to a battery voltage of 3.0 V. The discharge capacity at this time was defined as the 1 C discharge capacity (mAh).

Next, by a method in which charging was conducted at 25°C at a current value of 6 mA (about 1.0 C) to a battery voltage of 4.2 V, and further, reduction in the current value was started from 6 mA while 4.2 V was retained, charging was conducted for 3 hours in total, and thereafter, discharging was conducted at a current value of 60 mA (about 10 C) to a battery voltage of 3.0 V. The discharge capacity at this time was defined as the 10 C discharge capacity (mAh).

The proportion of the 10 C discharge capacity relative to the 1 C discharge capacity was calculated, and this value was defined as the rate characteristics.

```
Rate characteristics at 10 C (%) = (10 C discharge

capacity/1 C discharge capacity) × 100
```

The rate characteristics at 10 C was evaluated in accordance with the following criteria.

A: Rate characteristics at 10 C of 22% or more
B: Rate characteristics at 10 C of less than 220

[Cycle characteristics]

The battery subjected to the above rate test was discharged under conditions of a temperature of 25°C at a discharge current of 1 C to a discharge cutoff voltage of 3 V and then charged at a charge current of 1 C to a charge cutoff voltage of 4.2 V. This was taken as one cycle, and charge and discharge were repeated. Then, using the capacity retention after 300 cycles relative to the initial capacity (capacity in the first cycle), the cycle characteristics were evaluated in accordance with the following criteria.

Evaluation criteria for cycle characteristics

A: Capacity retention of 85% or more
B: Capacity retention of less than 85%

[Example 1]

(Production of layer (A))

To 100 parts by mass of polyethylene having a viscosity average molecular weight of 800,000, 1 part by mass of pentaerythrityl-tetrakis-[3-(3,5-di-t-butyl-4-hydroxyphenyl)propionate] as an antioxidant was added, and dry-blending was conducted using a tumble blender to provide a mixture of a polymer and the like. The mixture provided was purged with nitrogen and then fed via a feeder under a nitrogen atmosphere to a twin-screw extruder. Liquid paraffin (kinematic viscosity at 37.78°C: $7.59 \times 10^{-5}$ m$^2$/s) was poured with a plunger pump into the extruder cylinder.

Melt-kneading was conducted, and the feeder and the pump were adjusted such that the ratio of the amount of liquid paraffin in the entire mixture to be extruded reached 72% by mass (the resin composition concentration: 28% by mass). The melt-kneading was conducted under conditions including a setting temperature of 200°C, a screw rotation speed of 100 rpm, and a discharge rate of 230 kg/h.

Subsequently, the melt-kneaded product was extrusion-cast via a T-die onto a cooling roll controlled to a surface temperature of 25°C to thereby provide a gel sheet having a thickness of 1,450 $\mu$m.

Next, the gel sheet was introduced into a simultaneous biaxial tenter stretching machine and biaxially stretched. Setting stretch conditions were a MD magnification of 7.0 times, a TD magnification of 6.4 times, and a setting temperature of 127°C. Next, the gel sheet was introduced into a methylene chloride tank and sufficiently immersed in methylene chloride to extract and remove the liquid paraffin. Thereafter, methylene chloride was removed by drying to provide a porous body.

Next, the porous body was introduced into a TD tenter and subjected to heat setting. The heat setting temperature was 126°C, the TD maximum magnification was 1.5 times, and the relaxation ratio was 0.86. Then, a layer (A) having a thickness of 9.0 $\mu$m was provided.

(Formation of layer (B))

As a coating liquid for forming a layer (B) on the surface of the layer (A), a mixed liquid of materials shown in Table 1 was used. That is, 100 parts by mass of aluminum hydroxide oxide as an inorganic filler (boehmite, block form; D50 = 0.40 $\mu$m), 100 parts by mass of water, and 0.5 parts by mass of a dispersant 1 (sodium polyacrylate; weight average molecular weight: 6,000; insoluble matter when 1.0 g thereof is dissolved in 100 g of water: less than 1.0% by mass) were mixed and subjected to a bead mill treatment. The bead mill treatment was conducted under conditions of a bead diameter of 0.1 mm and a rotation speed inside the mill of 2,000 rpm. 4 parts by mass of an acrylic latex 1 (copolymer having 80% by mass of a unit derived from butyl acrylate, 16% by mass of a unit derived from methyl methacrylate, 3% by mass of a unit derived from acrylic acid, and 1% by mass of a unit derived from acrylamide; D50 = 150 nm, Tg = -28°C) as a water-insoluble binder, 0.5 parts by mass of a water-soluble binder 1 (sodium carboxymethyl cellulose; weight average molecular weight: 360,000; degree of etherification = 0.9; insoluble matter when 1.0 g thereof is dissolved in 100 g of water: less than 1.0% by mass), and 0.1 parts by mass of an additive 1 (polyoxyethylene alkylene alkyl ether (EMULGEN LS-110 manufactured by Kao Corporation)) were mixed to the mixed liquid after the treatment to prepare a coating liquid.

A corona discharge treatment was conducted on one surface of the layer (A) at a treatment intensity of 15 W/(m$^2$/min). The coating liquid was applied onto the treated surface using a gravure coater. Thereafter, the coating liquid on the layer (A) was dried at 60°C to remove water and form the layer (B) having a thickness of 3.0 $\mu$m on one surface of the layer (A), and thus a separator was provided.

The physical properties of the separator provided and evaluation results of a battery comprising the separator are shown in Table 1.

[Examples 2 to 68 and Comparative Examples 1 to 14]

The corresponding separator for an electricity storage device was produced in the same manner as in Example 1 except that those described in Tables 1 to 12 were used as the layer (A) and the layer (B), and the evaluation thereof was conducted.

The basis weight of the layer (A) was adjusted by controlling the thickness of a gel sheet to be cast, the porosity and the air permeability were adjusted by controlling the biaxial stretching temperature and heat setting temperature, and the puncture strength and the basis weight-equivalent puncture strength were adjusted by controlling the biaxial stretching temperature and the biaxial stretching ratio so as to achieve the numerical values listed in each table were achieved.

Only in Examples 2, 18, 28, 53 (and Example 70 mentioned below), the layers (B) having a thickness of 1.5 $\mu$m were formed on both surfaces of the layer (A) (the total thickness of the layers (B) : 3.0 $\mu$m).

[Example 69]

A corona discharge treatment was conducted at a treatment intensity of 10 W/(m$^2$/min) on the surface where the layer (A) was exposed of Examples 33. A water dispersion of the following acrylic latex 5 (solid content 30% by mass) was applied in pattern onto the treated surface using a gravure roll on which dots having a dot diameter of 200 $\mu$m and a depth of 5 $\mu$m had been engraved followed by drying to remove water in the coating liquid. The same steps except for the corona discharge treatment were also conducted on the layer (B) surface to provide a separator having a thermoplastic polymer-containing layer imparted on both the surfaces. The diameter of the dots formed on the separator was 250 $\mu$m, and the interval between the dots was 300 $\mu$m.

Acrylic latex 5: a copolymer having 15% by mass of a unit derived from butyl acrylate, 82% by mass of a unit derived from methyl methacrylate, and 3% by mass of a unit derived from acrylic acid; D50 = 500 nm; Tg = 68°C

[Example 70]

The water dispersion of the acrylic latex 5 (solid content 30% by mass) was applied in pattern onto both the surface where the layer (A) was exposed and the surface where the layer (B) was exposed of Example 53 using a gravure roll on which dots having a dot diameter of 200 $\mu$m and a depth of 5 $\mu$m had been engraved followed by drying to remove water in the coating liquid, and thus provided was a separator having a thermoplastic polymer-containing layer imparted on both the surfaces. The diameter of the dots formed on the separator was 250 $\mu$m, and the interval between the dots was 300 $\mu$m.

In the separators of Examples 27 and 47, the maximum particle diameter of the inorganic filler in the layer (B) was measured via cross-section observation, and the maximum particle diameters were 0.85 $\mu$m and 1.92 $\mu$m, respectively.

[Table 1]

| | | Example 1 | Example 2 | Example 3 | Example 4 | Example 5 | Example 6 | Example 7 |
|---|---|---|---|---|---|---|---|---|
| Layer (A) | Thickness of layer (A), $T_A$ ($\mu$m) | 9.0 | 9.0 | 9.0 | 9.0 | 9.0 | 9.0 | 9.0 |
| | Basis weight (g/m$^2$) | 5.3 | 5.3 | 5.3 | 5.3 | 5.3 | 5.3 | 5.3 |
| | Porositv (%) | 40 | 40 | 40 | 40 | 40 | 40 | 40 |
| | Air permeability (sec/100cc) | 140 | 140 | 140 | 140 | 140 | 140 | 140 |
| | Puncture strenath (gf) | 250 | 250 | 250 | 250 | 250 | 250 | 250 |
| | Basis weight-equivalent puncture strenath (gf/(g/m$^2$)) | 47 | 47 | 47 | 47 | 47 | 47 | 47 |
| | Corona treatment intensity (W/(m$^2$/min)) | 15 | 15 | 15 | 15 | 15 | 15 | 15 |
| | Absorption peak ratio | 0.075 | 0.075 | 0.075 | 0.075 | 0.075 | 0.075 | 0.075 |

| | | Example 1 | Example 2 | Example 3 | Example 4 | Example 5 | Example 6 | Example 7 |
|---|---|---|---|---|---|---|---|---|
| Layer (B) | Inorganic filler type | Boehmite | Boehmite | Boehmite | Boehmite | Boehmite | Boehmite | Boehmite |
| | Inorganic filler particle diameter, volume average particle diameter ($\mu$m) | 0.40 | 0.40 | 0.40 | 0.40 | 0.40 | 0.40 | 0.40 |
| | Particle diameter of inorganic filler redispersed from layer (B) ($\mu$m) | 0.40 | 0.40 | 0.40 | 0.40 | 0.40 | 0.40 | 0.40 |
| | Primary particle diameter of inorganic filler in layer (B) ($\mu$m) | 0.42 | 0.42 | 0.42 | 0.42 | 0.42 | 0.42 | 0.42 |
| | Water-insoluble binder type | Acrylic latex 1 | Acrylic latex 1 | Acrylic latex 1 | Acrylic latex 1 | Acrylic latex 1 | Acrylic latex 1 | Acrylic latex 1 |
| | Water-insoluble binder particle diameter (nm) | 150 | 150 | 150 | 150 | 150 | 150 | 150 |
| | Water-insoluble binder Tg (°C) | -28 | -28 | -28 | -28 | -28 | -28 | -28 |
| | Water-insoluble binder proportion (wt% based on inorganic filler) | 4 | 4 | 4 | 4 | 4 | 4 | 4 |
| | Dispersant type | Dispersant 1 | Dispersant 1 | Dispersant 1 | Dispersant 1 | Dispersant 1 | Dispersant 1 | Dispersant 1 |
| | Dispersant proportion (wt% based on inorganic filler) | 0.5 | 0.5 | 0.5 | 0.5 | 0.5 | 0.5 | 0.5 |
| | Water-soluble binder type | Water-soluble polvmer 1 | Water-soluble polvmer 1 | Water-soluble polvmer 1 | Water-soluble polvmer 1 | Water-soluble polvmer 1 | Water-soluble polvmer 1 | Water-soluble polvmer 1 |
| | Amount of water-soluble binder (wt% based on inorganic filler) | 0.5 | 0.5 | 0.5 | 0.5 | 0.5 | 0.5 | 0.5 |
| | Other additive | Additive 1 | Additive 1 | Additive 1 | Additive 1 | Additive 1 | Additive 1 | Additive 1 |
| | Thickness of layer (B), $T_B$ ($\mu$m) | 3.0 | 3.0 (one surface 1.5/1.5) | 4.5 | 4.0 | 3.5 | 2.5 | 2.0 |

EP 4 156 340 A1

| | | Example 1 | Example 2 | Example 3 | Example 4 | Example 5 | Example 6 | Example 7 |
|---|---|---|---|---|---|---|---|---|
| Others | Thermoplastic polymer-containing layer | - | - | - | - | - | - | - |
| Separator | Film thickness of separator, T ($\mu$m) | 12.0 | 12.0 | 13.5 | 13.0 | 12.5 | 11.5 | 11.0 |
| | $T_B/T$ | 0.25 | 0.25 | 0.33 | 0.31 | 0.28 | 0.22 | 0.18 |
| | Puncture strenath (gf) | 250 | 250 | 250 | 250 | 250 | 250 | 250 |
| | Air permeability (sec/100cc) | 160 | 160 | 168 | 168 | 165 | 158 | 154 |
| | Interfacial peel strenath H (N/m) | 12 | 12 | 12 | 12 | 12 | 12 | 12 |
| | Heat shrinkage rate S1 (%) | 1.0 | 1.0 | 0.2 | 0.4 | 0.8 | 1.2 | 1.6 |
| | Heat shrinkage rate S2 (%) | 1.3 | 1.3 | 0.0 | 0.0 | 0.6 | 1.7 | 2.4 |
| Lithium ion secondary battery | Safety evaluation 1 (oven heating test) | S | S | S | S | S | S | S |
| | Safety evaluation 2 (impact test) | C | C | C | C | C | C | C |
| | Rate characteristics | A | A | A | A | A | A | A |
| | Cycle characteristics | A | A | B | B | A | A | A |

[Table 2]

| | | Example 8 | Example 9 | Example 10 | Example 11 | Example 12 | Example 13 | Example 14 |
|---|---|---|---|---|---|---|---|---|
| Layer (A) | Thickness of layer (A), $T_A$ (μm) | 9.0 | 9.0 | 9.0 | 9.0 | 9.0 | 9.0 | 9.0 |
| | Basis weight (g/m²) | 5.3 | 5.3 | 5.3 | 5.3 | 5.3 | 5.3 | 5.3 |
| | Porosity (%) | 40 | 40 | 40 | 40 | 40 | 40 | 40 |
| | Air permeability (sec/100cc) | 140 | 140 | 140 | 140 | 140 | 140 | 140 |
| | Puncture strenath (gf) | 250 | 250 | 250 | 250 | 250 | 250 | 250 |
| | Basis weight-equivalent puncture strenath (gf/(g/m²)) | 47 | 47 | 47 | 47 | 47 | 47 | 47 |
| | Corona treatment intensity (W/(m²/min)) | 15 | 15 | 15 | 3 | 3 | 3 | 25 |
| | Absorption peak ratio | 0.075 | 0.075 | 0.075 | 0.013 | 0.025 | 0.050 | 0.100 |

| | | Example 8 | Example 9 | Example 10 | Example 11 | Example 12 | Example 13 | Example 14 |
|---|---|---|---|---|---|---|---|---|
| Layer (B) | Inorganic filler type | Boehmite | Boehmite | Boehmite | Boehmite | Boehmite | Boehmite | Boehmite |
| | Inorganic filler particle diameter, volume average particle diameter ($\mu$m) | 0.40 | 0.40 | 0.40 | 0.40 | 0.40 | 0.40 | 0.40 |
| | Particle diameter of inorganic filler redispersed from layer (B) ($\mu$m) | 0.40 | 0.40 | 0.40 | 0.40 | 0.40 | 0.40 | 0.40 |
| | Primary particle diameter of inorganic filler in layer (B) ($\mu$m) | 0.42 | 0.42 | 0.42 | 0.42 | 0.42 | 0.42 | 0.42 |
| | Water-insoluble binder type | Acrylic latex 1 | Acrylic latex 1 | Acrylic latex 1 | Acrylic latex 1 | Acrylic latex 1 | Acrylic latex 1 | Acrylic latex 1 |
| | Water-insoluble binder particle diameter (nm) | 150 | 150 | 150 | 150 | 150 | 150 | 150 |
| | Water-insoluble binder Tg (°C) | -28 | -28 | -28 | -28 | -28 | -28 | -28 |
| | Water-insoluble binder proportion (wt% based on inorganic filler) | 4 | 4 | 4 | 4 | 4 | 4 | 4 |
| | Dispersant type | Dispersant 1 | Dispersant 1 | Dispersant 1 | Dispersant 1 | Dispersant 1 | Dispersant 1 | Dispersant 1 |
| | Dispersant proportion (wt% based on inorganic filler) | 0.5 | 0.5 | 0.5 | 0.5 | 0.5 | 0.5 | 0.5 |
| | Water-soluble binder type | Water-soluble polvmer 1 | Water-soluble polvmer 1 | Water-soluble polvmer 1 | Water-soluble polvmer 1 | Water-soluble polvmer 1 | Water-soluble polvmer 1 | Water-soluble polvmer 1 |
| | Amount of water-soluble binder (wt% based on inorganic filler) | 0.5 | 0.5 | 0.5 | 0.5 | 0.5 | 0.5 | 0.5 |
| | Other additive | Additive 1 | Additive 1 | Additive 1 | Additive 1 | Additive 1 | Additive 1 | Additive 1 |
| | Thickness of layer (B), $T_B$ ($\mu$m) | 1.5 | 1.0 | 0.8 | 3.0 | 3.0 | 3.0 | 3.0 |

EP 4 156 340 A1

(continued)

| | | Example 8 | Example 9 | Example 10 | Example 11 | Example 12 | Example 13 | Example 14 |
|---|---|---|---|---|---|---|---|---|
| Others | Thermoplastic polymer-containing layer | - | - | - | - | - | - | - |
| Separator | Film thickness of separator, T (μm) | 10.5 | 10.0 | 9.8 | 12.0 | 12.0 | 12.0 | 12.0 |
| | $T_B$/T | 0.14 | 0.10 | 0.08 | 0.25 | 0.25 | 0.25 | 0.25 |
| | Puncture strength (gf) | 250 | 250 | 250 | 250 | 250 | 250 | 250 |
| | Air permeability (sec/100cc) | 150 | 150 | 150 | 160 | 160 | 160 | 165 |
| | Interfacial peel strength H (N/m) | 12 | 12 | 12 | 3 | 4 | 9 | 14 |
| | Heat shrinkage rate S1 (%) | 2.0 | 2.2 | 2.7 | 4.9 | 2.4 | 1.2 | 0.9 |
| | Heat shrinkage rate S2 (%) | 3.3 | 4.1 | 4.6 | 1.5 | 1.4 | 1.3 | 1.2 |
| Lithium ion secondary battery | Safety evaluation 1 (oven heating test) | S | A | B | B | A | S | S |
| | Safety evaluation 2 (impact test) | C | C | C | C | C | C | C |
| | Rate characteristics | A | A | A | A | A | A | A |
| | Cycle characteristics | A | A | A | A | A | A | A |

[Table 3]

| | | Example 15 | Example 16 | Example 17 | Example 18 | Example 19 | Example 20 | Example 21 |
|---|---|---|---|---|---|---|---|---|
| Layer (A) | Thickness of layer (A), $T_A$ ($\mu$m) | 9.0 | 9.0 | 9.0 | 9.0 | 9.0 | 9.0 | 9.0 |
| | Basis weight (g/m$^2$) | 5.3 | 5.3 | 5.3 | 5.3 | 5.3 | 5.3 | 5.3 |
| | Porosity (%) | 40 | 40 | 40 | 40 | 40 | 40 | 40 |
| | Air permeability (sec/100cc) | 140 | 140 | 140 | 140 | 140 | 140 | 140 |
| | Puncture strenath (gf) | 250 | 250 | 340 | 340 | 340 | 340 | 340 |
| | Basis weight-equivalent puncture strenath (gf/(g/m$^2$)) | 47 | 47 | 64 | 64 | 64 | 64 | 64 |
| | Corona treatment intensity (W/(m$^2$/min)) | 35 | 50 | 15 | 15 | 15 | 15 | 15 |
| | Absorption peak ratio | 0.125 | 0.175 | 0.075 | 0.075 | 0.075 | 0.075 | 0.075 |

| | | Example 15 | Example 16 | Example 17 | Example 18 | Example 19 | Example 20 | Example 21 |
|---|---|---|---|---|---|---|---|---|
| Layer (B) | Inorganic filler type | Boehmite | Boehmite | Boehmite | Boehmite | Boehmite | Boehmite | Boehmite |
| | Inorganic filler particle diameter, volume average particle diameter ($\mu$m) | 0.40 | 0.40 | 0.40 | 0.40 | 0.40 | 0.40 | 0.40 |
| | Particle diameter of inorganic filler redispersed from layer (B) ($\mu$m) | 0.40 | 0.40 | 0.40 | 0.40 | 0.40 | 0.40 | 0.40 |
| | Primary particle diameter of inorganic filler in layer (B) ($\mu$m) | 0.42 | 0.42 | 0.42 | 0.42 | 0.42 | 0.42 | 0.42 |
| | Water-insoluble binder type | Acrylic latex 1 | Acrylic latex 1 | Acrylic latex 1 | Acrylic latex 1 | Acrylic latex 1 | Acrylic latex 1 | Acrylic latex 1 |
| | Water-insoluble binder particle diameter (nm) | 150 | 150 | 150 | 150 | 150 | 150 | 150 |
| | Water-insoluble binder Tg (°C) | -28 | -28 | -28 | -28 | -28 | -28 | -28 |
| | Water-insoluble binder proportion (wt% based on inorganic filler) | 4 | 4 | 4 | 4 | 4 | 4 | 4 |
| | Dispersant type | Dispersant 1 | Dispersant 1 | Dispersant 1 | Dispersant 1 | Dispersant 1 | Dispersant 1 | Dispersant 1 |
| | Dispersant proportion (wt% based on inorganic filler) | 0.5 | 0.5 | 0.5 | 0.5 | 0.5 | 0.5 | 0.5 |
| | Water-soluble binder type | Water-soluble polvmer 1 | Water-soluble polvmer 1 | Water-soluble polvmer 1 | Water-soluble polvmer 1 | Water-soluble polvmer 1 | Water-soluble polvmer 1 | Water-soluble polvmer 1 |
| | Amount of water-soluble binder (wt% based on inorganic filler) | 0.5 | 0.5 | 0.5 | 0.5 | 0.5 | 0.5 | 0.5 |
| | Other additive | Additive 1 | Additive 1 | Additive 1 | Additive 1 | Additive 1 | Additive 1 | Additive 1 |
| | Thickness of layer (B), $T_B$ ($\mu$m) | 3.0 | 3.0 | 3.0 | 3 (one surface 1.5/1.5) | 4.5 | 4.0 | 3.5 |

EP 4 156 340 A1

33

|  |  | Example 15 | Example 16 | Example 17 | Example 18 | Example 19 | Example 20 | Example 21 |
|---|---|---|---|---|---|---|---|---|
| Others | Thermoplastic polymer-containing layer | - | - | - | - | - | - | - |
| Separator | Film thickness of separator, T ($\mu$m) | 12.0 | 12.0 | 12.0 | 12.0 | 13.5 | 13.0 | 12.5 |
|  | $T_B/T$ | 0.25 | 0.25 | 0.25 | 0.25 | 0.33 | 0.31 | 0.28 |
|  | Puncture strength (gf) | 250 | 250 | 340 | 340 | 340 | 340 | 340 |
|  | Air permeability (sec/100cc) | 190 | 330 | 160 | 160 | 168 | 168 | 165 |
|  | Interfacial peel strenth H (N/m) | 22 | 32 | 12 | 12 | 12 | 12 | 12 |
|  | Heat shrinkage rate S1 (%) | 0.8 | 0.7 | 1.3 | 1.3 | 0.4 | 0.6 | 1.0 |
|  | Heat shrinkage rate S2 (%) | 1.1 | 0.9 | 1.6 | 1.7 | 0.3 | 0.8 | 1.5 |
| Lithium ion secondary battery | Safety evaluation 1 (oven heating test) | S | S | S | S | S | S | S |
|  | Safety evaluation 2 (impact test) | C | C | B | B | B | B | B |
|  | Rate characteristics | A | B | A | A | A | A | A |
|  | Cycle characteristics | A | B | A | A | A | A | A |

[Table 4]

| | | Example 22 | Example 23 | Example 24 | Example 25 | Example 26 | Example 27 | Example 28 |
|---|---|---|---|---|---|---|---|---|
| Layer (A) | Thickness of layer (A), $T_A$ (μm) | 9.0 | 9.0 | 9.0 | 9.0 | 9.0 | 9.0 | 9.0 |
| | Basis weight (g/m²) | 5.3 | 5.3 | 5.3 | 5.3 | 5.3 | 5.3 | 5.3 |
| | Porosity (%) | 40 | 40 | 40 | 40 | 40 | 40 | 40 |
| | Air permeability (sec/100cc) | 140 | 140 | 140 | 140 | 140 | 140 | 140 |
| | Puncture strenath (gf) | 340 | 340 | 340 | 340 | 340 | 450 | 450 |
| | Basis weight-equivalent puncture strength (gf/(g/m²)) | 64 | 64 | 64 | 64 | 64 | 85 | 85 |
| | Corona treatment intensity (W/(m²/min)) | 15 | 15 | 15 | 15 | 15 | 15 | 15 |
| | Absorption peak ratio | 0.075 | 0.075 | 0.075 | 0.075 | 0.075 | 0.075 | 0.075 |

EP 4 156 340 A1

(continued)

| | | Example 22 | Example 23 | Example 24 | Example 25 | Example 26 | Example 27 | Example 28 |
|---|---|---|---|---|---|---|---|---|
| Layer (B) | Inorganic filler type | Boehmite | Boehmite | Boehmite | Boehmite | Boehmite | Boehmite | Boehmite |
| | Inorganic filler particle diameter, volume average particle diameter ($\mu$m) | 0.40 | 0.40 | 0.40 | 0.40 | 0.40 | 0.40 | 0.40 |
| | Particle diameter of inorganic filler redispersed from layer (B) ($\mu$m) | 0.40 | 0.40 | 0.40 | 0.40 | 0.40 | 0.40 | 0.40 |
| | Primary particle diameter of inorganic filler in layer (B) ($\mu$m) | 0.42 | 0.42 | 0.42 | 0.42 | 0.42 | 0.42 | 0.42 |
| | Water-insoluble binder type | Acrylic latex 1 | Acrylic latex 1 | Acrylic latex 1 | Acrylic latex 1 | Acrylic latex 1 | Acrylic latex 1 | Acrylic latex 1 |
| | Water-insoluble binder particle diameter (nm) | 150 | 150 | 150 | 150 | 150 | 150 | 150 |
| | Water-insoluble binder Tg (°C) | -28 | -28 | -28 | -28 | -28 | -28 | -28 |
| | Water-insoluble binder proportion (wt% based on inorganic filler) | 4 | 4 | 4 | 4 | 4 | 4 | 4 |
| | Dispersant type | Dispersant 1 | Dispersant 1 | Dispersant 1 | Dispersant 1 | Dispersant 1 | Dispersant 1 | Dispersant 1 |
| | Dispersant proportion (wt% based on inorganic filler) | 0.5 | 0.5 | 0.5 | 0.5 | 0.5 | 0.5 | 0.5 |
| | Water-soluble binder type | Water-soluble polvmer 1 | Water-soluble polvmer 1 | Water-soluble polvmer 1 | Water-soluble polvmer 1 | Water-soluble polvmer 1 | Water-soluble polymer 1 | Water-soluble polymer 1 |
| | Amount of water-soluble binder (wt% based on inorganic filler) | 0.5 | 0.5 | 0.5 | 0.5 | 0.5 | 0.5 | 0.5 |
| | Other additive | Additive 1 | Additive 1 | Additive 1 | Additive 1 | Additive 1 | Additive 1 | Additive 1 |
| | Thickness of layer (B), $T_B$ ($\mu$m) | 2.5 | 2.0 | 1.5 | 1.0 | 0.8 | 3.0 | 3.0 (one surface 1.5/1.5) |

| | | Example 22 | Example 23 | Example 24 | Example 25 | Example 26 | Example 27 | Example 28 |
|---|---|---|---|---|---|---|---|---|
| Others | Thermoplastic polymer-containing laver | - | - | - | - | - | - | - |
| Separator | Film thickness of separator, T ($\mu$m) | 11.5 | 11.0 | 10.5 | 10.0 | 9.8 | 12.0 | 12.0 |
| | $T_B/T$ | 0.22 | 0.18 | 0.14 | 0.10 | 0.08 | 0.25 | 0.25 |
| | Puncture strength (gf) | 340 | 340 | 340 | 340 | 340 | 450 | 450 |
| | Air permeability (sec/100cc) | 158 | 154 | 150 | 150 | 150 | 160 | 160 |
| | Interfacial peel strenath H (N/m) | 12 | 12 | 12 | 12 | 12 | 12 | 12 |
| | Heat shrinkage rate S1 (%) | 1.5 | 1.8 | 2.5 | 3.3 | 3.8 | 1.7 | 1.7 |
| | Heat shrinkage rate S2 (%) | 2.3 | 3.2 | 4.0 | 4.9 | 6.4 | 2.3 | 2.2 |
| Lithium ion secondary battery | Safety evaluation 1 (oven heating test) | S | S | A | B | C | S | S |
| | Safety evaluation 2 (impact test) | B | B | B | B | B | A | A |
| | Rate characteristics | A | A | A | A | A | A | A |
| | Cycle characteristics | A | A | A | A | A | A | A |

[Table 5]

| | | Example 29 | Example 30 | Example 31 | Example 32 | Example 33 | Example 34 | Example 35 |
|---|---|---|---|---|---|---|---|---|
| Layer (A) | Thickness of layer (A), $T_A$ ($\mu$m) | 9.0 | 9.0 | 9.0 | 9.0 | 9.0 | 9.0 | 9.0 |
| | Basis weight (g/m$^2$) | 5.3 | 5.3 | 5.3 | 5.3 | 5.3 | 5.3 | 5.3 |
| | Porosity (%) | 40 | 40 | 40 | 40 | 40 | 40 | 40 |
| | Air permeability (sec/100cc) | 140 | 140 | 140 | 140 | 140 | 140 | 140 |
| | Puncture strength (gf) | 450 | 450 | 450 | 450 | 450 | 450 | 450 |
| | Basis weight-equivalent puncture strength (gf/(g/m$^2$)) | 85 | 85 | 85 | 85 | 85 | 85 | 85 |
| | Corona treatment intensity (W/(m$^2$/min)) | 15 | 15 | 15 | 15 | 15 | 15 | 15 |
| | Absorption peak ratio | 0.075 | 0.075 | 0.075 | 0.075 | 0.075 | 0.075 | 0.075 |

(continued)

| | | Example 29 | Example 30 | Example 31 | Example 32 | Example 33 | Example 34 | Example 35 |
|---|---|---|---|---|---|---|---|---|
| Layer (B) | Inorganic filler type | Boehmite | Boehmite | Boehmite | Boehmite | Boehmite | Boehmite | Boehmite |
| | Inorganic filler particle diameter, volume average particle diameter (μm) | 0.40 | 0.40 | 0.40 | 0.40 | 0.40 | 0.40 | 0.40 |
| | Particle diameter of inorganic filler redispersed from layer (B) (μm) | 0.40 | 0.40 | 0.40 | 0.40 | 0.40 | 0.40 | 0.40 |
| | Primary particle diameter of inorganic filler in layer (B) (μm) | 0.42 | 0.42 | 0.42 | 0.42 | 0.42 | 0.42 | 0.42 |
| | Water-insoluble binder type | Acrylic latex 1 | Acrylic latex 1 | Acrylic latex 1 | Acrylic latex 1 | Acrylic latex 1 | Acrylic latex 1 | Acrylic latex 1 |
| | Water-insoluble binder particle diameter (nm) | 150 | 150 | 150 | 150 | 150 | 150 | 150 |
| | Water-insoluble binder Tg (°C) | -28 | -28 | -28 | -28 | -28 | -28 | -28 |
| | Water-insoluble binder proportion (wt% based on inorganic filler) | 4 | 4 | 4 | 4 | 4 | 4 | 4 |
| | Dispersant type | Dispersant 1 | Dispersant 1 | Dispersant 1 | Dispersant 1 | Dispersant 1 | Dispersant 1 | Dispersant 1 |
| | Dispersant proportion (wt% based on inorganic filler) | 0.5 | 0.5 | 0.5 | 0.5 | 0.5 | 0.5 | 0.5 |
| | Water-soluble binder type | Water-soluble polvmer 1 | Water-soluble polvmer 1 | Water-soluble polvmer 1 | Water-soluble polvmer 1 | Water-soluble polvmer 1 | Water-soluble polvmer 1 | Water-soluble polvmer 1 |
| | Amount of water-soluble binder (wt% based on inorganic filler) | 0.5 | 0.5 | 0.5 | 0.5 | 0.5 | 0.5 | 0.5 |
| | Other additive | Additive 1 | Additive 1 | Additive 1 | Additive 1 | Additive 1 | Additive 1 | Additive 1 |
| | Thickness of layer (B), $T_B$ (μm) | 4.5 | 4.0 | 3.5 | 2.5 | 2.0 | 1.5 | 1.0 |

| | | Example 29 | Example 30 | Example 31 | Example 32 | Example 33 | Example 34 | Example 35 |
|---|---|---|---|---|---|---|---|---|
| Others | Thermoplastic polymer-containing laver | - | - | - | - | - | - | - |
| Separator | Film thickness of separator, T (μm) | 13.5 | 13.0 | 12.5 | 11.5 | 11.0 | 10.5 | 10.0 |
| | $T_B$/T | 0.33 | 0.31 | 0.28 | 0.22 | 0.18 | 0.14 | 0.10 |
| | Puncture strength (gf) | 450 | 450 | 450 | 450 | 450 | 450 | 450 |
| | Air permeability (sec/100cc) | 168 | 168 | 165 | 158 | 154 | 150 | 150 |
| | Interfacial peel strenath H (N/m) | 12 | 12 | 12 | 12 | 12 | 12 | 12 |
| | Heat shrinkage rate S1 (%) | 0.6 | 0.9 | 1.2 | 2.0 | 2.4 | 4.0 | 4.3 |
| | Heat shrinkage rate S2 (%) | 0.9 | 1.3 | 2.3 | 3.1 | 3.9 | 4.6 | 6.4 |
| Lithium ion secondary battery | Safety evaluation 1 (oven heatina test) | S | S | S | S | A | B | C |
| | Safety evaluation 2 (impact test) | A | A | A | A | A | A | A |
| | Rate characteristics | A | A | A | A | A | A | A |
| | Cycle characteristics | B | B | A | A | A | A | A |

[Table 6]

| | | Example 36 | Example 37 | Example 38 | Example 39 | Example 40 | Example 41 | Example 42 |
|---|---|---|---|---|---|---|---|---|
| Layer (A) | Thickness of layer (A), $T_A$ (μm) | 9.0 | 9.0 | 9.0 | 9.0 | 9.0 | 9.0 | 9.0 |
| | Basis weight (g/m²) | 5.3 | 5.3 | 5.3 | 5.3 | 5.3 | 5.3 | 5.3 |
| | Porosity (%) | 40 | 40 | 40 | 40 | 40 | 40 | 40 |
| | Air permeability (sec/100cc) | 140 | 140 | 140 | 140 | 140 | 140 | 140 |
| | Puncture strength (gf) | 450 | 450 | 450 | 450 | 450 | 450 | 450 |
| | Basis weight-equivalent puncture strength (gf/(g/m²)) | 85 | 85 | 85 | 85 | 85 | 85 | 85 |
| | Corona treatment intensity (W/(m²/min)) | 15 | 15 | 15 | 15 | 15 | 15 | 15 |
| | Absorption peak ratio | 0.075 | 0.075 | 0.075 | 0.075 | 0.075 | 0.075 | 0.075 |

(continued)

| Layer (B) | | Example 36 | Example 37 | Example 38 | Example 39 | Example 40 | Example 41 | Example 42 |
|---|---|---|---|---|---|---|---|---|
| | Inorganic filler type | Boehmite | Boehmite | Boehmite | Boehmite | Boehmite | Alumina | Barium sulfate |
| | Inorganic filler particle diameter, volume average particle diameter (μm) | 0.40 | 0.40 | 0.40 | 0.40 | 0.40 | 0.40 | 0.40 |
| | Particle diameter of inorganic filler redispersed from layer (B) (μm) | 0.40 | 0.40 | 0.40 | 0.40 | 0.40 | 0.40 | 0.40 |
| | Primary particle diameter of inorganic filler in layer (B) (μm) | 0.42 | 0.42 | 0.42 | 0.42 | 0.42 | 0.42 | 0.42 |
| | Water-insoluble binder type | Acrylic latex 1 | Acrylic latex 2 | Acrylic latex 1 | Acrylic latex 1 | Acrylic latex 1 | Acrylic latex 1 | Acrylic latex 1 |
| | Water-insoluble binder particle diameter (nm) | 150 | 150 | 150 | 150 | 150 | 150 | 150 |
| | Water-insoluble binder Tg (°C) | -28 | -23 | -28 | -28 | -28 | -28 | -28 |
| | Water-insoluble binder proportion (wt% based on inorganic filler) | 4 | 4 | 4 | 7 | 10 | 4 | 4 |
| | Dispersant type | Dispersant 1 | Dispersant 1 | Dispersant 1 | Dispersant 1 | Dispersant 1 | Dispersant 1 | Dispersant 1 |
| | Dispersant proportion (wt% based on inorganic filler) | 0.5 | 0.5 | 0.5 | 0.5 | 0.5 | 0.5 | 0.5 |
| | Water-soluble binder type | Water-soluble polymer 1 | Water-soluble polymer 1 | Water-soluble polymer 1 | Water-soluble polymer 1 | Water-soluble polymer 1 | Water-soluble polymer 1 | Water-soluble polymer 1 |
| | Amount of water-soluble binder (wt% based on inorganic filler) | 0.5 | 0.5 | 0.5 | 0.5 | 0.5 | 0.5 | 0.5 |
| | Other additive | Additive 1 | Additive 1 | Additive 2 | Additive 1 | Additive 1 | Additive 1 | Additive 1 |
| | Thickness of layer (B), $T_B$ (μm) | 0.8 | 3.0 | 3.0 | 3.0 | 3.0 | 3.0 | 3.0 |

(continued)

|  |  | Example 36 | Example 37 | Example 38 | Example 39 | Example 40 | Example 41 | Example 42 |
|---|---|---|---|---|---|---|---|---|
| Others | Thermoplastic polymer-containing layer | - | - | - | - | - | - | - |
| Separator | Film thickness of separator, T ($\mu$m) | 9.8 | 12.0 | 12.0 | 12.0 | 12.0 | 12.0 | 12.0 |
|  | $T_B/T$ | 0.08 | 0.25 | 0.25 | 0.25 | 0.25 | 0.25 | 0.25 |
|  | Puncture strength (gf) | 450 | 450 | 450 | 450 | 450 | 450 | 450 |
|  | Air permeability (sec/100cc) | 150 | 160 | 170 | 180 | 220 | 160 | 160 |
|  | Interfacial peel strength H (N/m) | 12 | 12 | 12 | 27 | 37 | 12 | 12 |
|  | Heat shrinkage rate S1 (%) | 4.8 | 1.5 | 1.6 | 1.7 | 1.7 | 1.6 | 1.5 |
|  | Heat shrinkage rate S2 (%) | 8.4 | 1.4 | 1.3 | 1.4 | 1.5 | 2.2 | 2.1 |
| Lithium ion secondary battery | Safety evaluation 1 (oven heating test) | C | S | S | S | S | S | S |
|  | Safety evaluation 2 (impact test) | A | A | A | A | A | A | A |
|  | Rate characteristics | A | A | A | A | B | A | A |
|  | Cycle characteristics | A | A | A | A | A | A | A |

EP 4 156 340 A1

[Table 7]

| | | Example 43 | Example 44 | Example 45 | Example 46 | Example 47 | Example 48 | Example 49 |
|---|---|---|---|---|---|---|---|---|
| Layer (A) | Thickness of layer (A), $T_A$ (μm) | 9.0 | 9.0 | 9.0 | 9.0 | 9.0 | 9.0 | 9.0 |
| | Basis weight (g/m²) | 5.3 | 5.3 | 5.3 | 5.3 | 5.3 | 5.3 | 5.3 |
| | Porosity (%) | 40 | 40 | 40 | 40 | 40 | 40 | 40 |
| | Air permeability (sec/100cc) | 140 | 140 | 140 | 140 | 140 | 140 | 140 |
| | Puncture strength (gf) | 190 | 450 | 450 | 450 | 450 | 450 | 450 |
| | Basis weight-equivalent puncture strength (gf/(g/m²)) | 36 | 85 | 85 | 85 | 85 | 85 | 85 |
| | Corona treatment intensity (W/(m²/min)) | 15 | 15 | 15 | 15 | 15 | 15 | 15 |
| | Absorption peak ratio | 0.075 | 0.075 | 0.075 | 0.075 | 0.075 | 0.075 | 0.075 |

| | | Example 43 | Example 44 | Example 45 | Example 46 | Example 47 | Example 48 | Example 49 |
|---|---|---|---|---|---|---|---|---|
| Layer (B) | Inorganic filler type | Boehmite | Boehmite | Boehmite | Boehmite | Boehmite | Boehmite | Boehmite |
| | Inorganic filler particle diameter, volume average particle diameter ($\mu$m) | 0.40 | 0.40 | 0.40 | 0.90 | 0.70 | 0.60 | 0.30 |
| | Particle diameter of inorganic filler redispersed from layer (B) ($\mu$m) | 0.40 | 0.40 | 0.40 | 0.92 | 0.66 | 0.58 | 0.32 |
| | Primary particle diameter of inorganic filler in layer (B) ($\mu$m) | 0.42 | 0.42 | 0.42 | 0.91 | 0.69 | 0.59 | 0.29 |
| | Water-insoluble binder type | Acrylic latex 1 | Acrylic latex 1 | Acrylic latex 1 | Acrylic latex 1 | Acrylic latex 1 | Acrylic latex 1 | Acrylic latex 1 |
| | Water-insoluble binder particle diameter (nm) | 150 | 150 | 150 | 150 | 150 | 150 | 150 |
| | Water-insoluble binder Tg (°C) | -28 | -28 | -28 | -28 | -28 | -28 | -28 |
| | Water-insoluble binder proportion (wt% based on inorganic filler) | 4 | 4 | 4 | 4 | 4 | 4 | 4 |
| | Dispersant type | Dispersant 1 | Dispersant 2 | Dispersant 3 | Dispersant 1 | Dispersant 1 | Dispersant 1 | Dispersant 1 |
| | Dispersant proportion (wt% based on inorganic filler) | 0.5 | 0.5 | 0.5 | 0.5 | 0.5 | 0.5 | 0.5 |
| | Water-soluble binder type | Water-soluble polymer 1 | Water-soluble polymer 1 | Water-soluble polymer 1 | Water-soluble polymer 1 | Water-soluble polymer 1 | Water-soluble polymer 1 | Water-soluble polymer 1 |
| | Amount of water-soluble binder (wt% based on inorganic filler) | 0.5 | 0.5 | 0.5 | 0.5 | 0.5 | 0.5 | 0.5 |
| | Other additive | Additive 1 | Additive 1 | Additive 1 | Additive 1 | Additive 1 | Additive 1 | Additive 1 |
| | Thickness of layer (B), $T_B$ ($\mu$m) | 3.0 | 3.0 | 3.0 | 3.0 | 3.0 | 3.0 | 3.0 |

EP 4 156 340 A1

| | | Example 43 | Example 44 | Example 45 | Example 46 | Example 47 | Example 48 | Example 49 |
|---|---|---|---|---|---|---|---|---|
| Others | Thermoplastic polymer-containing layer | - | - | - | - | - | - | - |
| Separator | Film thickness of separator, T ($\mu$m) | 12.0 | 12.0 | 12.0 | 12.0 | 12.0 | 12.0 | 12.0 |
| | $T_B/T$ | 0.25 | 0.25 | 0.25 | 0.25 | 0.25 | 0.25 | 0.25 |
| | Puncture strength (gf) | 190 | 450 | 450 | 450 | 450 | 450 | 450 |
| | Air permeability (sec/100cc) | 160 | 160 | 160 | 150 | 153 | 157 | 200 |
| | Interfacial peel strength H (N/m) | 12 | 12 | 12 | 9 | 10 | 11 | 15 |
| | Heat shrinkage rate S1 (%) | 0.5 | 1.8 | 2.5 | 3.8 | 2.7 | 2.3 | 1.4 |
| | Heat shrinkage rate S2 (%) | 1.1 | 2.4 | 2.7 | 7.9 | 3.7 | 3.1 | 1.9 |
| Lithium ion secondary battery | Safety evaluation 1 (oven heatina test) | S | S | A | C | B | A | S |
| | Safety evaluation 2 (impact test) | C | A | A | A | A | A | A |
| | Rate characteristics | A | A | A | A | A | A | B |
| | Cycle characteristics | A | A | A | A | A | A | B |

EP 4 156 340 A1

[Table 8]

| | | Example 50 | Example 51 | Example 52 | Example 53 | Example 54 | Example 55 | Example 56 |
|---|---|---|---|---|---|---|---|---|
| Layer (A) | Thickness of layer (A), $T_A$ (μm) | 9.0 | 9.0 | 9.0 | 9.0 | 9.0 | 9.0 | 9.0 |
| | Basis weight (g/m²) | 5.3 | 5.3 | 5.3 | 5.3 | 5.3 | 5.3 | 5.3 |
| | Porosity (%) | 40 | 40 | 40 | 40 | 40 | 40 | 40 |
| | Air permeability (sec/100cc) | 140 | 140 | 140 | 140 | 140 | 140 | 140 |
| | Puncture strenath (gf) | 450 | 450 | 510 | 510 | 450 | 450 | 450 |
| | Basis weight-equivalent puncture strength (gf/(g/m²)) | 85 | 85 | 96 | 96 | 85 | 85 | 85 |
| | Corona treatment intensity (W/(m²/min)) | 15 | 15 | 15 | 15 | 15 | 15 | 15 |
| | Absorption peak ratio | 0.075 | 0.075 | 0.075 | 0.075 | 0.075 | 0.075 | 0.075 |

| | | Example 50 | Example 51 | Example 52 | Example 53 | Example 54 | Example 55 | Example 56 |
|---|---|---|---|---|---|---|---|---|
| Layer (B) | Inorganic filler type | Boehmite | Boehmite | Boehmite | Boehmite | Boehmite | Boehmite | Boehmite |
| | Inorganic filler particle diameter, volume average particle diameter ($\mu$m) | 0.10 | 0.05 | 0.40 | 0.40 | 0.40 | 0.40 | 0.40 |
| | Particle diameter of inorganic filler redispersed from layer (B) ($\mu$m) | 0.11 | 0.06 | 0.40 | 0.40 | 0.40 | 0.40 | 0.40 |
| | Primary particle diameter of inorganic filler in layer (B) ($\mu$m) | 0.12 | 0.05 | 0.42 | 0.42 | 0.42 | 0.42 | 0.42 |
| | Water-insoluble binder type | Acrylic latex 1 | Acrylic latex 1 | Acrylic latex 1 | Acrylic latex 1 | Acrylic latex 1 | Acrylic latex 1 | Acrylic latex 1 |
| | Water-insoluble binder particle diameter (nm) | 150 | 150 | 150 | 150 | 150 | 150 | 150 |
| | Water-insoluble binder Tg (°C) | -28 | -28 | -28 | -28 | -28 | -28 | -28 |
| | Water-insoluble binder proportion (wt% based on inorganic filler) | 4 | 4 | 4 | 4 | 12 | 4 | 4 |
| | Dispersant type | Dispersant 1 | Dispersant 1 | Dispersant 1 | Dispersant 1 | Dispersant 1 | Dispersant 1 | Dispersant 1 |
| | Dispersant proportion (wt% based on inorganic filler) | 0.5 | 0.5 | 0.5 | 0.5 | 0.5 | 1.0 | 1.8 |
| | Water-soluble binder type | Water-soluble polymer 1 | Water-soluble polymer 1 | Water-soluble polymer 1 | Water-soluble polymer 1 | Water-soluble polymer 1 | Water-soluble polymer 1 | Water-soluble polymer 1 |
| | Amount of water-soluble binder (wt% based on inorganic filler) | 0.5 | 0.5 | 0.5 | 0.5 | 0.5 | 0.5 | 0.5 |
| | Other additive | Additive 1 | Additive 1 | Additive 1 | Additive 1 | Additive 1 | Additive 1 | Additive 1 |
| | Thickness of layer (B), $T_B$ ($\mu$m) | 3.0 | 3.0 | 3.0 | 3.0 (one surface 1.5/1.5) | 3.0 | 3.0 | 3.0 |

(continued)

| | | Example 50 | Example 51 | Example 52 | Example 53 | Example 54 | Example 55 | Example 56 |
|---|---|---|---|---|---|---|---|---|
| Others | Thermoplastic polymer-containing layer | - | - | - | - | - | - | - |
| Separator | Film thickness of separator, T ($\mu$m) | 12.0 | 12.0 | 12.0 | 12.0 | 12.0 | 12.0 | 12.0 |
| | $T_B/T$ | 0.25 | 0.25 | 0.25 | 0.25 | 0.25 | 0.25 | 0.25 |
| | Puncture strenath (gf) | 450 | 450 | 510 | 510 | 450 | 450 | 450 |
| | Air permeability (sec/100cc) | 240 | 360 | 160 | 160 | 430 | 170 | 230 |
| | Interfacial peel strength H (N/m) | 8 | 5 | 12 | 12 | 43 | 13 | 14 |
| | Heat shrinkage rate S1 (%) | 1.2 | 0.9 | 2.0 | 2.1 | 2.9 | 1.2 | 1.0 |
| | Heat shrinkage rate S2 (%) | 1.0 | 0.5 | 2.6 | 2.5 | 4.4 | 1.8 | 1.3 |
| Lithium ion secondary battery | Safety evaluation 1 (oven heating test) | S | S | S | A | B | S | S |
| | Safety evaluation 2 (impact test) | A | A | A | A | A | A | A |
| | Rate characteristics | B | B | A | A | B | A | A |
| | Cycle characteristics | B | B | A | A | B | A | A |

[Table 9]

| | | Example 57 | Example 58 | Example 59 | Example 60 | Example 61 | Example 62 | Example 63 |
|---|---|---|---|---|---|---|---|---|
| Layer (A) | Thickness of layer (A), $T_A$ ($\mu$m) | 9.0 | 9.0 | 9.0 | 9.0 | 9.0 | 9.0 | 9.0 |
| | Basis weight (g/m$^2$) | 5.3 | 5.3 | 5.3 | 5.3 | 4.7 | 4.2 | 3.9 |
| | Porosity (%) | 40 | 40 | 40 | 40 | 45 | 50 | 55 |
| | Air permeability (sec/100cc) | 140 | 140 | 140 | 140 | 110 | 90 | 65 |
| | Puncture strength (gf) | 450 | 450 | 450 | 450 | 300 | 270 | 250 |
| | Basis weight-equivalent puncture strength (gf/(g/m$^2$)) | 85 | 85 | 85 | 85 | 64 | 64 | 64 |
| | Corona treatment intensity (W/(m$^2$/min)) | 15 | 15 | 15 | 15 | 15 | 15 | 15 |
| | Absorption peak ratio | 0.075 | 0.075 | 0.075 | 0.075 | 0.075 | 0.075 | 0.075 |

| | | Example 57 | Example 58 | Example 59 | Example 60 | Example 61 | Example 62 | Example 63 |
|---|---|---|---|---|---|---|---|---|
| Layer (B) | Inorganic filler type | Boehmite | Boehmite | Boehmite | Boehmite | Boehmite | Boehmite | Boehmite |
| | Inorganic filler particle diameter, volume average particle diameter ($\mu$m) | 0.40 | 0.40 | 0.40 | 0.40 | 0.40 | 0.40 | 0.40 |
| | Particle diameter of inorganic filler redispersed from layer (B) ($\mu$m) | 0.40 | 0.40 | 0.40 | 0.40 | 0.40 | 0.40 | 0.40 |
| | Primary particle diameter of inorganic filler in layer (B) ($\mu$m) | 0.42 | 0.42 | 0.42 | 0.42 | 0.42 | 0.42 | 0.42 |
| | Water-insoluble binder type | Acrylic latex 1 | Acrylic latex 1 | Acrylic latex 1 | Acrylic latex 1 | Acrylic latex 1 | Acrylic latex 1 | Acrylic latex 1 |
| | Water-insoluble binder particle diameter (nm) | 150 | 150 | 150 | 150 | 150 | 150 | 150 |
| | Water-insoluble binder Tg (°C) | -28 | -28 | -28 | -28 | -28 | -28 | -28 |
| | Water-insoluble binder proportion (wt% based on inorganic filler) | 4 | 4 | 4 | 4 | 4 | 4 | 4 |
| | Dispersant type | Dispersant 1 | Dispersant 1 | Dispersant 1 | Dispersant 1 | Dispersant 1 | Dispersant 1 | Dispersant 1 |
| | Dispersant proportion (wt% based on inorganic filler) | 2.4 | 1.0 | 1.0 | 1.0 | 0.5 | 0.5 | 0.5 |
| | Water-soluble binder type | Water-soluble polymer 1 | Water-soluble polymer 1 | Water-soluble polymer 1 | Water-soluble polymer 1 | Water-soluble polymer 1 | Water-soluble polymer 1 | Water-soluble polymer 1 |
| | Amount of water-soluble binder (wt% based on inorganic filler) | 0.5 | 1.0 | 1.8 | 2.4 | 0.5 | 0.5 | 0.5 |
| | Other additive | Additive 1 | Additive 1 | Additive 1 | Additive 1 | Additive 1 | Additive 1 | Additive 1 |
| | Thickness of layer (B), $T_B$ ($\mu$m) | 3.0 | 3.0 | 3.0 | 3.0 | 2.0 | 2.0 | 2.0 |

| | | Example 57 | Example 58 | Example 59 | Example 60 | Example 61 | Example 62 | Example 63 |
|---|---|---|---|---|---|---|---|---|
| Others | Thermoplastic polymer-containing layer | - | - | - | - | - | - | - |
| Separator | Film thickness of separator, T ($\mu$m) | 12.0 | 12.0 | 12.0 | 12.0 | 11.0 | 11.0 | 11.0 |
| | $T_B/T$ | 0.25 | 0.25 | 0.25 | 0.25 | 0.18 | 0.18 | 0.18 |
| | Puncture strength (gf) | 450 | 450 | 450 | 450 | 300 | 270 | 250 |
| | Air permeability (sec/100cc) | 430 | 180 | 250 | 480 | 123 | 102 | 76 |
| | Interfacial peel strength H (N/m) | 16 | 14 | 15 | 18 | 12 | 12 | 12 |
| | Heat shrinkage rate S1 (%) | 0.8 | 1.4 | 1.2 | 1.0 | 1.8 | 1.7 | 1.6 |
| | Heat shrinkage rate S2 (%) | 1.0 | 1.8 | 1.5 | 1.4 | 2.8 | 2.5 | 2.4 |
| Lithium ion secondary battery | Safety evaluation 1 (oven heating test) | S | S | S | S | S | S | S |
| | Safety evaluation 2 (impact test) | A | A | A | A | B | C | C |
| | Rate characteristics | B | A | A | B | A | A | A |
| | Cycle characteristics | A | A | A | A | A | A | A |

[Table 101]

| | | Example 64 | Example 65 | Example 66 | Example 67 | Example 68 | Example 69 | Example 70 |
|---|---|---|---|---|---|---|---|---|
| Layer (A) | Thickness of layer (A), $T_A$ ($\mu$m) | 9.0 | 9.0 | 9.0 | 9.0 | 9.0 | 9.0 | 9.0 |
| | Basis weiaht (g/m$^2$) | 4.4 | 3.5 | 2.4 | 3.9 | 3.5 | 5.3 | 5.3 |
| | Porosity (%) | 40 | 40 | 40 | 55 | 40 | 40 | 40 |
| | Air permeability (sec/100cc) | 115 | 93 | 62 | 65 | 93 | 140 | 140 |
| | Puncture strength (gf) | 280 | 230 | 160 | 400 | 370 | 450 | 510 |
| | Basis weight-equivalent puncture strength (gf/(g/m$^2$)) | 64 | 66 | 67 | 103 | 106 | 85 | 96 |
| | Corona treatment intensity (W/(m$^2$/min)) | 15 | 15 | 15 | 15 | 15 | 15 | 15 |
| | Absorption peak ratio | 0.075 | 0.075 | 0.075 | 0.075 | 0.075 | 0.075 | 0.075 |

(continued)

| | | Example 64 | Example 65 | Example 66 | Example 67 | Example 68 | Example 69 | Example 70 |
|---|---|---|---|---|---|---|---|---|
| Layer (B) | Inorganic filler type | Boehmite | Boehmite | Boehmite | Boehmite | Boehmite | Boehmite | Boehmite |
| | Inorganic filler particle diameter, volume average particle diameter μm) | 0.40 | 0.40 | 0.40 | 0.40 | 0.40 | 0.40 | 0.40 |
| | Particle diameter of inorganic filler redispersed from layer (B) (μm) | 0.40 | 0.40 | 0.40 | 0.40 | 0.40 | 0.40 | 0.40 |
| | Primary particle diameter of inorganic filler in layer (B) (μm) | 0.42 | 0.42 | 0.42 | 0.42 | 0.42 | 0.42 | 0.42 |
| | Water-insoluble binder type | Acrylic latex 1 | Acrylic latex 1 | Acrylic latex 1 | Acrylic latex 1 | Acrylic latex 1 | Acrylic latex 1 | Acrylic latex 1 |
| | Water-insoluble binder particle diameter (nm) | 150 | 150 | 150 | 150 | 150 | 150 | 150 |
| | Water-insoluble binder Tg (°C) | -28 | -28 | -28 | -28 | -28 | -28 | -28 |
| | Water-insoluble binder proportion (wt% based on inorganic filler) | 4 | 4 | 4 | 4 | 4 | 4 | 4 |
| | Dispersant type | Dispersant 1 | Dispersant 1 | Dispersant 1 | Dispersant 1 | Dispersant 1 | Dispersant 1 | Dispersant 1 |
| | Dispersant proportion (wt% based on inorganic filler) | 0.5 | 0.5 | 0.5 | 0.5 | 0.5 | 0.5 | 0.5 |
| | Water-soluble binder type | Water-soluble polymer 1 | Water-soluble polymer 1 | Water-soluble polymer 1 | Water-soluble polymer 1 | Water-soluble polymer 1 | Water-soluble polymer 1 | Water-soluble polymer 1 |
| | Amount of water-soluble binder (wt% based on inorganic filler) | 0.5 | 0.5 | 0.5 | 0.5 | 0.5 | 0.5 | 0.5 |
| | Other additive | Additive 1 | Additive 1 | Additive 1 | Additive 1 | Additive 1 | Additive 1 | Additive 1 |
| | Thickness of layer (B), $T_B$ (μm) | 2.0 | 2.0 | 2.0 | 2.0 | 2.0 | 2.0 | 3.0 (one surface 1.5/1.5) |

| | | Example 64 | Example 65 | Example 66 | Example 67 | Example 68 | Example 69 | Example 70 |
|---|---|---|---|---|---|---|---|---|
| Others | Thermoplastic polymer-containing layer | - | - | - | - | - | Acrylic latex 5 (both surfaces) | Acrylic latex 5 (both surfaces) |
| Separator | Film thickness of separator, T ($\mu$m) | 9.5 | 7.5 | 5.0 | 11.0 | 7.5 | 12.0 | 13.0 |
| | $T_B/T$ | 0.21 | 0.20 | 0.20 | 0.18 | 0.20 | 0.18 | 0.25 |
| | Puncture strength (gf) | 280 | 230 | 160 | 400 | 370 | 450 | 510 |
| | Air permeability (sec/100cc) | 125 | 103 | 70 | 75 | 153 | 159 | 165 |
| | Interfacial peel strength H (N/m) | 12 | 12 | 12 | 12 | 12 | 12 | 12 |
| | Heat shrinkage rate S1 (%) | 1.7 | 1.4 | 1.1 | 2.2 | 2.0 | 1.9 | 1.5 |
| | Heat shrinkage rate S2 (%) | 2.5 | 2.0 | 1.6 | 3.5 | 3.6 | 3.4 | 2.3 |
| Lithium ion secondary battery | Safety evaluation 1 (oven heating test) | S | S | S | A | S | S | S |
| | Safety evaluation 2 (impact test) | C | C | C | A | B | A | A |
| | Rate characteristics | A | A | A | A | A | A | A |
| | Cycle characteristics | A | A | A | A | A | A | A |

EP 4 156 340 A1

[Table 11]

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Layer (A) | Thickness of layer (A), $T_A$ ($\mu$m) | 9.0 | 9.0 | 10.0 | 10.0 | 12.0 | 12.0 | 9.0 |
| | Basis weioht (g/m$^2$) | 5.3 | 5.3 | 5.9 | 5.9 | 5.3 | 5.3 | 5.3 |
| | Porosity (%) | 40 | 40 | 40 | 40 | 40 | 40 | 40 |
| | Air permeability (sec/100cc) | 190 | 190 | 155 | 155 | 70 | 70 | 140 |
| | Puncture strength (gf) | 450 | 450 | 495 | 495 | 311 | 311 | 450 |
| | Basis weight-equivalent puncture strength (gf/(g/m$^2$)) | 85 | 85 | 84 | 84 | 59 | 59 | 85 |
| | Corona treatment intensity (W/(m$^2$/min)) | 0 | 0 | 15 | 15 | 0 | 0 | 0 |
| | Absorption peak ratio | 0 | 0 | 0.075 | 0.075 | 0.075 | 0.075 | 0 |

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Layer (B) | Inorganic filler type | Alumina | Alumina | Boehmite | Boehmite | Boehmite | Boehmite | Boehmite |
| | Inorganic filler particle diameter, volume average particle diameter ($\mu$m) | 0.60 | 0.60 | 0.30 | 0.30 | 0.30 | 0.30 | 0.40 |
| | Particle diameter of inorganic filler redispersed from laver (B) ($\mu$m) | 0.58 | 0.58 | 0.32 | 0.32 | 0.32 | 0.32 | 0.40 |
| | Primary particle diameter of inorganic filler in laver (B) ($\mu$m) | 0.59 | 0.59 | 0.29 | 0.29 | 0.29 | 0.29 | 0.42 |
| | Water-insoluble binder type | Acrylic latex 3 | Acrylic latex 3 | Not Applicable | Acrylic latex 3 | Acrylic latex 3 | Not Applicable | Acrylic latex 1 |
| | Water-insoluble binder particle diameter (nm) | 150 | 150 | - | 150 | 150 | - | 150 |
| | Water-insoluble binder Tg (°C) | -29 | -29 | - | -29 | -29 | - | -28 |
| | Water-insoluble binder proportion (wt% based on inorganic filler) | 4 | 4 | 0 | 6 | 5 | 0 | 4 |
| | Dispersant type | Dispersant 4 | Dispersant 5 | Dispersant 5 | Dispersant 5 | Dispersant 3 | Dispersant 1 | Dispersant 1 |
| | Dispersant proportion (wt% based on inorganic filler) | 0.5 | 0.5 | 1.0 | 0.3 | 5.0 | 10.0 | 0.5 |
| | Water-soluble binder type | Water-soluble polymer 1 | Water-soluble polymer 1 | Water-soluble polymer 2 | Not Applicable | Not Applicable | Not Applicable | Water-soluble polymer 1 |
| | Amount of water-soluble binder (wt% based on inorganic filler) | 0.5 | 0.5 | 4.0 | 0.0 | 0.0 | 0.0 | 0.5 |
| | Other additive | Additive 3 | Additive 3 | Not Applicable | Not Applicable | Not Applicable | Not Applicable | Additive 1 |
| | Thickness of layer (B), $T_B$ ($\mu$m) | 3.0 | 3.0 | 2.0 | 2.0 | 2.0 | 2.0 | 3.0 |

EP 4 156 340 A1

57

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Others | Thermoplastic polymer-containing layer | - | - | - | - | - | - | - |
| Separator | Film thickness of separator, T ($\mu$m) | 19.0 | 19.0 | 12.0 | 12.0 | 14.0 | 14.0 | 12.0 |
| | $T_B/T$ | 0.16 | 0.16 | 0.17 | 0.17 | 0.14 | 0.14 | 0.25 |
| | Puncture strength (of) | 250 | 250 | 495 | 495 | 311 | 311 | 450 |
| | Air permeability (sec/100cc) | 210 | 210 | 210 | 215 | 101 | 6300 | 160 |
| | Interfacial peel strength H (N/m) | 0 | 0 | 2 | 8 | 0 | 2 | 0 |
| | Heat shrinkage rate S1 (%) | 18.8 | 18.8 | 29.5 | 15.2 | 12.0 | 19.8 | 16.3 |
| | Heat shrinkage rate S2 (%) | 2.5 | 2.5 | 3.0 | 1.3 | 9.6 | 8.2 | 1.2 |
| Lithium ion secondary battery | Safety evaluation 1 (oven heating test) | D | D | D | D | D | D | D |
| | Safety evaluation 2 (impact test) | D | D | A | A | C | C | A |
| | Rate characteristics | A | A | A | A | A | B | A |
| | Cycle characteristics | A | A | B | B | B | B | A |

EP 4 156 340 A1

[Table 12]

| | | Comparative Example 8 | Comparative Example 9 | Comparative Example 10 | Comparative Example 11 | Comparative Example 12 | Comparative Example 13 | Comparative Example 14 |
|---|---|---|---|---|---|---|---|---|
| Layer (A) | Thickness of layer (A), $T_A$ ($\mu$m) | 9.0 | 9.0 | 9.0 | 9.0 | 9.0 | 9.0 | 9.0 |
| | Basis weioht (g/m$^2$) | 5.3 | 5.3 | 5.3 | 5.3 | 5.3 | 5.3 | 5.3 |
| | Porosity (%) | 40 | 40 | 40 | 40 | 40 | 40 | 40 |
| | Air permeability (sec/100cc) | 140 | 140 | 140 | 140 | 140 | 140 | 140 |
| | Puncture strength (gf) | 450 | 450 | 450 | 450 | 250 | 250 | 250 |
| | Basis weight-equivalent puncture strength (gf/(g/m$^2$)) | 85 | 85 | 85 | 85 | 47 | 47 | 47 |
| | Corona treatment intensity (W/(m$^2$/min)) | 15 | 15 | 15 | 15 | 15 | 15 | 15 |
| | Absorption peak ratio | 0.075 | 0.075 | 0.075 | 0.075 | 0.075 | 0.075 | 0.075 |

| | | Comparative Example 8 | Comparative Example 9 | Comparative Example 10 | Comparative Example 11 | Comparative Example 12 | Comparative Example 13 | Comparative Example 14 |
|---|---|---|---|---|---|---|---|---|
| Layer (B) | Inorganic filler type | Boehmite | Boehmite | Boehmite | Boehmite | Boehmite | Boehmite | Boehmite |
| | Inorganic filler particle diameter, volume average particle diameter ($\mu$m) | 0.40 | 0.40 | 0.40 | 0.40 | 0.40 | 1.00 | 0.60 |
| | Particle diameter of inorganic filler redispersed from layer (B) ($\mu$m) | 0.40 | 0.40 | 0.40 | 0.40 | 0.40 | 0.96 | 0.58 |
| | Primary particle diameter of inorganic filler in layer (B) ($\mu$m) | 0.42 | 0.42 | 0.42 | 0.42 | 0.42 | 0.99 | 0.59 |
| | Water-insoluble binder type | Acrylic latex 1 | Acrylic latex 1 | Acrylic latex 1 | Acrylic latex 1 | Acrylic latex 3 | Acrylic latex 4 | Acrylic latex 3 |
| | Water-insoluble binder particle diameter (nm) | 150 | 150 | 150 | 150 | 150 | 350 | 150 |
| | Water-insoluble binder Tg (°C) | -28 | -28 | -28 | -28 | -29 | -29 | -29 |
| | Water-insoluble binder proportion (wt% based on inorganic filler) | 4 | 4 | 4 | 4 | 4 | 4 | 4 |
| | Dispersant type | Dispersant 5 | Dispersant 6 | Dispersant 1 | Dispersant 1 | Not Applicable | Dispersant 5 | Dispersant 5 |
| | Dispersant proportion (wt% based on inorganic filler) | 0.5 | 0.5 | 0.5 | 0.5 | 0.0 | 0.5 | 0.5 |
| | Water-soluble binder type | Water-soluble polymer 1 | Water-soluble polymer 1 | Water-soluble polymer 3 | Water-soluble polymer 2 | Water-soluble polymer 1 | Water-soluble polymer 2 | Water-soluble polymer 2 |
| | Amount of water-soluble binder (wt% based on inorganic filler) | 0.5 | 0.5 | 0.5 | 0.5 | 0.5 | 0.5 | 0.5 |
| | Other additive | Additive 1 | Additive 1 | Additive 1 | Additive 1 | Additive 1 | Not Applicable | Not Applicable |
| | Thickness of layer (B), $T_B$ ($\mu$m) | 3.0 | 3.0 | 3.0 | 3.0 | 3.0 | 3.0 | 3.0 |

EP 4 156 340 A1

(continued)

| | | Comparative Example 8 | Comparative Example 9 | Comparative Example 10 | Comparative Example 11 | Comparative Example 12 | Comparative Example 13 | Comparative Example 14 |
|---|---|---|---|---|---|---|---|---|
| Others | Thermoplastic polymer-containing layer | - | - | - | - | - | - | - |
| Separator | Film thickness of separator, T (μm) | 12.0 | 12.0 | 12.0 | 12.0 | 12.0 | 12.0 | 12.0 |
| | $T_B/T$ | 0.25 | 0.25 | 0.25 | 0.25 | 0.25 | 0.25 | 0.25 |
| | Puncture strength (of) | 450 | 450 | 450 | 450 | 250 | 250 | 250 |
| | Air permeability (sec/100cc) | 160 | 160 | 160 | 160 | 160 | 160 | 160 |
| | Interfacial peel strength H (N/m) | 10 | 8 | 8 | 10 | 4 | 2 | 11 |
| | Heat shrinkage rate S1 (%) | 8.2 | 10.3 | 15.8 | 14.7 | 28.1 | 15.8 | 9.1 |
| | Heat shrinkage rate S2 (%) | 3.8 | 3.9 | 2.5 | 2.6 | 46.5 | 39.0 | 3.2 |
| Lithium ion secondary battery | Safety evaluation 1 (oven heating test) | D | D | D | D | D | D | D |
| | Safety evaluation 2 (impact test) | A | A | A | A | C | C | C |
| | Rate characteristics | A | A | A | A | A | A | A |
| | Cycle characteristics | A | A | A | A | A | A | A |

As the acrylic latexes 2 to 4, dispersants 2 to 6, water-soluble polymers 2 to 3, and additives 2 to 3 in each table, the following materials were used.

Acrylic latex 2: a copolymer having 70% by mass of a unit derived from butyl acrylate, 16% by mass of a unit derived from methyl methacrylate, 3% by mass of a unit derived from acrylic acid, 1% by mass of a unit derived from acrylamide, and 10% by mass of a unit derived from glycidyl methacrylate; D50 = 150 nm; Tg = -23°C

Acrylic latex 3: a copolymer having 80% by mass of a unit derived from butyl acrylate, 17% by mass of a unit derived from methyl methacrylate, and 3% by mass of a unit derived from acrylic acid; D50 = 150 nm; Tg = -29°C

Acrylic latex 4: a copolymer having 80% by mass of a unit derived from butyl acrylate, 17% by mass of a unit derived from methyl methacrylate, and 3% by mass of a unit derived from acrylic acid; D50 = 350 nm; Tg = -29°C

Dispersant 2: lithium polyacrylate (weight average molecular weight: 6,000; insoluble matter when 1.0 g thereof is dissolved in 100 g of water: less than 1.0% by mass)

Dispersant 3: a copolymer having 50% by mass of a unit derived from sodium acrylate and 50% by mass of a unit derived from acrylonitrile (weight average molecular weight: 6,000; insoluble matter when 1.0 g thereof is dissolved in 100 g of water: less than 1.0% by mass)

Dispersant 4: a copolymer of 89% by mass of a unit derived from sodium acrylate and 11% by mass of a unit derived from sodium 3-allyloxy-2-hydroxypropane sulfonate (weight average molecular weight: 6,000; insoluble matter when 1.0 g thereof is dissolved in 100 g of water: less than 1.0% by mass)

Dispersant 5: ammonium polyacrylate (weight average molecular weight: 6,000; insoluble matter when 1.0 g thereof is dissolved in 100 g of water: less than 1.0% by mass)

Dispersant 6: polyacrylic acid (weight average molecular weight: 6,000; insoluble matter when 1.0 g thereof is dissolved in 100 g of water: less than 1.0% by mass)

Water-soluble polymer 2: polyvinyl alcohol (weight average molecular weight: 150,000; insoluble matter when 1.0 g thereof is dissolved in 100 g of water: less than 1.0% by mass)

Water-soluble polymer 3: polyvinylpyrrolidone (weight average molecular weight: 360,000; insoluble matter when 1.0 g thereof is dissolved in 100 g of water: less than 1.0% by mass)

Additive 2: polyoxyethylene alkylene alkyl ether (EMULGEN LS-110 manufactured by Kao Corporation; 0.10% by mass relative to the amount of the inorganic filler) and ammonium zirconium carbonate (metal chelate-type crosslinking agent; 1.0% by mass relative to the amount of the inorganic filler)

Additive 3: polyoxyethylene alkylene alkyl ether (EMULGEN LS-110 manufactured by Kao Corporation; 0.50% by mass relative to the amount of the inorganic filler)

The present application claims priority to a Japanese Patent Application filed on March 5, 2021 (Japanese Patent Application No. 2021-035688), the contents of which are hereby incorporated by reference.

## Claims

1. A separator for an electricity storage device, comprising:

   a layer (A) comprising a polyolefin; and
   a layer (B) disposed on at least one surface of the layer (A) and comprising an inorganic filler, a water-insoluble binder, a water-soluble binder, and a polyacrylic acid-based dispersant,
   wherein a heat shrinkage rate S1 of the separator for the electricity storage device at 140°C in propylene carbonate is 5% or less.

2. A separator for an electricity storage device, comprising:

a layer (A) comprising a polyolefin; and
a layer (B) disposed on at least one surface of the layer (A) and comprising an inorganic filler, a water-insoluble binder, a water-soluble binder, and a polyacrylic acid-based dispersant,
wherein the polyacrylic acid-based dispersant comprises one or more selected from the group consisting of:

a neutralized monovalent metal ion salt of polyacrylic acid, and
a copolymer of the neutralized monovalent metal ion salt of acrylic acid and acrylic acid,

the water-soluble binder comprises a cellulose ether, and
an interfacial peel strength H between the layer (A) and the layer (B) in propylene carbonate is 3 N/m or more.

3. The separator for the electricity storage device according to claim 1 or 2, wherein a basis weight-equivalent puncture strength, of the layer (A) is 40 gf/(g/m$^2$) or more.

4. The separator for the electricity storage device according to any one of claims 1 to 3, wherein a heat shrinkage rate S2 of the separator for the electricity storage device at 150°C in air is 5% or less.

5. The separator for the electricity storage device according to any one of claims 1, 3, and 4, wherein the heat shrinkage rate S1 is 2.50 or less.

6. The separator for the electricity storage device according to any one of claims 1 to 5, wherein a thickness T of the separator for the electricity storage device is 3 $\mu$m or more and 16 $\mu$m or less.

7. The separator for the electricity storage device according to any one of claims 1 to 6, wherein a ratio of a thickness of the layer (B) $T_B$ to the thickness T, $T_B/T$, is from 0.1 to 0.3.

8. The separator for the electricity storage device according to any one of claims 1 to 7, wherein a puncture strength of the separator for the electricity storage device is 200 gf or more.

9. The separator for the electricity storage device according to any one of claims 1 to 8, wherein an absorption peak ratio at 1734 cm$^{-1}$/2918 cm$^{-1}$, which is obtained by measuring the surface of the layer (A) on the layer (B) side with ATR-IR, is from 0.025 to 0.125.

10. The separator for the electricity storage device according to any one of claims 1 and 3 to 9, wherein the polyacrylic acid-based dispersant comprises one or more selected from the group consisting of:

a neutralized monovalent metal ion salt of polyacrylic acid, and
a copolymer of the neutralized monovalent metal ion salt of acrylic acid and acrylic acid.

11. The separator for the electricity storage device according to any one of claims 1 and 3 to 10, wherein the water-soluble binder comprises a cellulose ether.

12. The separator for the electricity storage device according to any one of claims 1 to 11, wherein the inorganic filler has a D50 particle diameter of 0.1 $\mu$m or more and 0.7 $\mu$m or less.

13. The separator for the electricity storage device according to any one of claims 1 to 12, wherein an air permeability of the separator for the electricity storage device is from 50 to 500 seconds/100 cc.

14. The separator for the electricity storage device according to any one of claims 1 to 13, wherein an air permeability of the layer (A) is from 30 to 450 seconds/100 cc.

15. An electricity storage device comprising:

a positive electrode comprising Li, Co, and Ni;
a negative electrode opposed to the positive electrode; and
the separator for the electricity storage device according to any one of claims 1 to 14, disposed between the positive electrode and the negative electrode, wherein
a content ratio of each of Co and Ni in the metals other than Li in the positive electrode is 20 mol% or less and

EP 4 156 340 A1

60 mol% or more.

64

| INTERNATIONAL SEARCH REPORT | International application No. |
|---|---|
| | **PCT/JP2022/008796** |

**A.    CLASSIFICATION OF SUBJECT MATTER**

*H01M 4/525*(2010.01)i; *H01G 11/52*(2013.01)i; *H01M 50/42*(2021.01)i; *H01M 50/431*(2021.01)i; *H01M 50/443*(2021.01)i; *H01M 50/446*(2021.01)i; *H01M 50/451*(2021.01)i; *H01M 50/489*(2021.01)i
FI:    H01M50/489; H01G11/52; H01M4/525; H01M50/42; H01M50/431; H01M50/443 B; H01M50/443 M; H01M50/446; H01M50/451

According to International Patent Classification (IPC) or to both national classification and IPC

**B.    FIELDS SEARCHED**

Minimum documentation searched (classification system followed by classification symbols)

H01M4/525; H01G11/52; H01M50/42; H01M50/431; H01M50/443; H01M50/446; H01M50/451; H01M50/489

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2021/020061 A1 (NIPPON ZEON CO., LTD.) 04 February 2021 (2021-02-04)<br>entire text | 1-15 |
| A | JP 2006-27024 A (ASAHI KASEI CHEMICALS CORP.) 02 February 2006 (2006-02-02)<br>entire text | 1-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 April 2022** | **10 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

PCT/JP2022/008796

| Patent document cited in search report | | | Publication date (day/month/year) | Patent family member(s) | Publication date (day/month/year) |
|---|---|---|---|---|---|
| WO | 2021/020061 | A1 | 04 February 2021 | (Family: none) | |
| JP | 2006-27024 | A | 02 February 2006 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019140114 A
- JP 2021035688 A